# EUROPEAN PATENT APPLICATION

(11) **EP 2 981 147 A1**
(43) Date of publication of application: **03.02.2016**
(21) Application number: 13883030.2
(22) Date of filing: 22.04.2013
(51) Int. Cl.: H04W 84/12

(54) **METHOD AND APPARATUS FOR ACCESSING NETWORK, AND NETWORK SYSTEM**

(71) Applicant: Huawei Technologies Co., Ltd., Longgang District Shenzhen, Guangdong 518129 (CN)
(72) Inventor: LI, Yue, Shenzhen Guangdong 518129 (CN); GUO, Xiaolong, Shenzhen Guangdong 518129 (CN); BRITO, Pablo, Shenzhen Guangdong 518129 (CN); ZHU, Song, Shenzhen Guangdong 518129 (CN)
(74) Representative: Thun, Clemens
(86) International application number: PCT/CN2013/074526
(87) International publication number: WO 2014/172836

(57) **Abstract**

Embodiments of the present invention provide a network access method and apparatus, and a network system. The method includes: receiving, by first user equipment through a wireless fidelity Wi-Fi network, account information sent by second user equipment; sending, by the first user equipment, the account information to a mobility management entity MME, so that the MME establishes, between the first user equipment and a gateway according to the account information, a dedicated bearer serving the second user equipment; and establishing, by the first user equipment, a mapping relationship between identification information of the second user equipment and the dedicated bearer after confirming that the establishment of the dedicated bearer is completed, where the identification information of the second user equipment is used for distinguishing the second user equipment that accesses the first user equipment through the Wi-Fi network.

## Description

### TECHNICAL FIELD

Embodiments of the present invention relate to communication technologies, and in particular, to a network access method and apparatus, and a network system.

### BACKGROUND

With the large-scale application of a wireless fidelity (Wireless Fidelity, Wi-Fi for short) technology, some user equipments not only have a cellular network communication function, but also basically have a Wi-Fi function. However, there are also some other user equipments that have a Wi-Fi function but do not have a cellular network communication function, for example, some tablet computers and e-books. For these user equipments that have a Wi-Fi function but do not have a cellular network communication function, they can be connected to the Internet only in a place covered by a Wi-Fi hot spot. When the user equipments that have a Wi-Fi function but do not have a cellular network communication function are moved out of a hot spot area, they have to be disconnected from the Internet.

User equipment that has a Wi-Fi function and a cellular network communication function may generally become a Wi-Fi access point by using application software, and user equipment that has a Wi-Fi function but does not have a cellular network communication function may be connected to the Wi-Fi access point by means of Wi-Fi, and then communicate with a base station by using a cellular network communication capability of the user equipment that has a Wi-Fi function and a cellular network communication function. A network side cannot confirm that data is transmitted by the user equipment that does not have a cellular network communication function, thereby causing that the user equipment that has a Wi-Fi function and a cellular network communication function is charged. Therefore, most of user equipments that have both a Wi-Fi function and a cellular network communication function do not serve as Wi-Fi access points, so that user equipment that has a Wi-Fi function but does not have a cellular network communication function still cannot access a cellular network in a place covered by a Wi-Fi hot spot.

Embodiments of the present invention provide a network access method and apparatus, and a network system, which are used to solve a problem of charging, by a cellular network side, user equipment that has a Wi-Fi function but does not have a cellular network communication function in the prior art.

According to a first aspect of the present invention, a network access method is provided, including:
receiving, by first user equipment through a wireless fidelity Wi-Fi network, account information sent by second user equipment;
sending, by the first user equipment, the account information to a mobility management entity MME, so that the MME establishes, between the first user equipment and a gateway according to the account information, a dedicated bearer serving the second user equipment; and
establishing, by the first user equipment, a mapping relationship between identification information of the second user equipment and the dedicated bearer after confirming that the establishment of the dedicated bearer is completed.

In a first possible implementation manner of the first aspect, the method further includes:
receiving, by the first user equipment by using the dedicated bearer, downlink data sent by the gateway; and
sending, by the first user equipment through the Wi-Fi network according to the mapping relationship between the identification information of the second user equipment and the dedicated bearer, the downlink data to the second user equipment corresponding to the identification information of the second user equipment.

With reference to the first aspect or the first possible implementation manner of the first aspect, in a second possible implementation manner of the first aspect, the method further includes:
receiving, by the first user equipment through the Wi-Fi network, uplink data sent by the second user equipment, where the uplink data carries the identification information of the second user equipment; and
sending, by the first user equipment, the uplink data to the gateway according to the mapping relationship between the identification information of the second user equipment and the dedicated bearer and by using the dedicated bearer corresponding to the identification information of the second user equipment.

According to the second possible implementation manner of the first aspect, in a third possible implementation manner of the first aspect, if the dedicated bearer is a bearer established on a newly established public data network PDN connection, before the sending the uplink data to the gateway by using the dedicated bearer corresponding to the identification information of the second user equipment, the method further includes:
confirming, by the first user equipment, that the uplink data carries an Internet Protocol IP address allocated by the gateway for the second user equipment.

According to the second possible implementation manner of the first aspect, in a fourth possible implementation manner of the first aspect, if the dedicated bearer is a bearer established on an existing PDN connection between the first user equipment and the gateway, before the sending the uplink data to the gateway by using the dedicated bearer corresponding to the identification information of the second user equipment, the method further includes:
confirming, by the first user equipment, that the uplink data carries an IP address of the first user equipment.

With reference to the first to fourth possible implementation manners of the first aspect, in a fifth possible implementation manner of the first aspect, after the sending, by the first user equipment, the account information to a mobility management entity MME, and before the confirming, by the first user equipment, that the establishment of the dedicated bearer is completed, the method further includes:
receiving, by the first user equipment, a random number generated in a process of verifying the account information and sent by the MME;
sending, by the first user equipment, the random number to the second user equipment;
receiving, by the first user equipment, a first check value generated according to the random number and sent by the second user equipment; and
sending, by the first user equipment, the first check value to the MME.

According to the fifth possible implementation manner of the first aspect, in a sixth possible implementation manner of the first aspect, the receiving, by the first user equipment through the Wi-Fi network, uplink data sent by the second user equipment includes:
receiving, by the first user equipment through the Wi-Fi network, the uplink data sent by the second user equipment, where the uplink data is encrypted by using a key generated according to the random number, and the uplink data carries the identification information of the second user equipment; and
the sending, by the first user equipment, the uplink data to the gateway according to the mapping relationship between the identification information of the second user equipment and the dedicated bearer and by using the dedicated bearer corresponding to the identification information of the second user equipment includes:
   sending, by the first user equipment, the uplink data encrypted by using the key to the gateway according to the mapping relationship between the identification information of the second user equipment and the dedicated bearer and by using the dedicated bearer corresponding to the identification information of the second user equipment.

According to the fifth possible implementation manner of the first aspect, in a seventh possible implementation manner of the first aspect, the receiving, by the first user equipment by using the dedicated bearer, downlink data sent by the gateway includes:
receiving, by the first user equipment on the dedicated bearer, the downlink data sent by the gateway to the second user equipment, where the downlink data is encrypted by using a key generated according to the random number; and
the sending, by the first user equipment through the Wi-Fi network according to the mapping relationship between the identification information of the second user equipment and the dedicated bearer, the downlink data to the second user equipment corresponding to the identification information of the second user equipment includes:
   sending, by the first user equipment, the downlink data encrypted by using the key to the second user equipment by means of Wi-Fi according to the mapping relationship between the identification information of the second user equipment and the dedicated bearer.

With reference to the first aspect or the first to seventh possible implementation manners of the first aspect, in an eighth possible implementation manner of the first aspect, before the receiving, by first user equipment through a wireless fidelity Wi-Fi network, account information sent by second user equipment, the method further includes:
acquiring, by the first user equipment, a short range communication-identity SRC-ID configured by a base station for the first user equipment, and broadcasting the SRC-ID in the Wi-Fi network, so that the second user equipment accesses the first user equipment; or
requesting, by the first user equipment, to acquire the SRC-ID from an application layer server, and broadcasting the SRC-ID in the Wi-Fi network, so that the second user equipment accesses the first user equipment; or
selecting, by the first user equipment, the SRC-ID from an SRC-ID list stored at an application layer, and broadcasting the SRC-ID in the Wi-Fi network, so that the second user equipment accesses the first user equipment.

With reference to the first aspect or the first to eighth possible implementation manners of the first aspect, in a ninth possible implementation manner of the first aspect, the first user equipment is user equipment that has a Wi-Fi function and a cellular network communication function; and
the second user equipment is user equipment that has a Wi-Fi function but does not have a cellular network communication function, where there are one or more second user equipments.

According to a second aspect of the present invention, a network access method is provided, including:
receiving, by a mobility management entity MME, account information of second user equipment sent by first user equipment, where the account information is sent by the second user equipment to the first user equipment through a wireless fidelity Wi-Fi network; and
establishing, by the MME between the first user equipment and a gateway according to the account information, a dedicated bearer serving the second user equipment, so that after confirming that the establishment of the dedicated bearer is completed, the first user equipment establishes a mapping relationship between identification information of the second user equipment and the dedicated bearer.

In a first possible implementation manner of the second aspect, after the receiving, by a mobility management entity MME, account information of second user equipment sent by first user equipment, the method further includes:
sending, by the MME, the account information to a home subscriber server HSS, so that the HSS verifies the second user equipment according to the account information; and
if the MME determines that the verification succeeds, establishing, by the MME between the first user equipment and the gateway, the dedicated bearer serving the second user equipment.

According to the first possible implementation manner of the second aspect, in a second possible implementation manner of the second aspect, after the sending, by the MME, the account information to a home subscriber server HSS, the method further includes:
receiving, by the MME, a random number generated in a process of verifying the account information by the HSS and a second check value generated by the HSS;
sending, by the MME, the random number to the first user equipment, so that the first user equipment sends the random number to the second user equipment, and receives a first check value generated according to the random number and sent by the second user equipment;
receiving, by the MME, the first check value generated by the second user equipment according to the random number and sent by the first user equipment; and
determining, by the MME, whether the second check value is the same as the first check value, and if yes, determining, by the MME, that the verification succeeds.

With reference to the second aspect or the first or second possible implementation manner of the second aspect, in a second possible implementation manner of the third aspect, the first user equipment is user equipment that has a Wi-Fi function and a cellular network communication function; and
the second user equipment is user equipment that has a Wi-Fi function but does not have a cellular network communication function, where there are one or more second user equipments.

According to a third aspect of the present invention, a network access method is provided, including:
acquiring, by second user equipment, account information; and
sending, by the second user equipment, the account information to first user equipment through a wireless fidelity Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network.

In a first possible implementation manner of the third aspect, before the sending, by the second user equipment, the account information to first user equipment through a wireless fidelity Wi-Fi network, the method further includes:
receiving, by the second user equipment, a short range communication-identity SRC-ID that is broadcast by the first user equipment in the Wi-Fi network; and
accessing, by the second user equipment, the first user equipment in the Wi-Fi network according to the SRC-ID.

With reference to the third aspect or the first possible implementation manner of the third aspect, in a second possible implementation manner of the third aspect, the method further includes:
sending, by the second user equipment, uplink data to the first user equipment through the Wi-Fi network, where the uplink data carries the identification information of the second user equipment, and the identification information of the second user equipment is used for distinguishing the second user equipment that accesses the first user equipment through the Wi-Fi network.

With reference to the third aspect or the first possible implementation manner of the third aspect, in a third possible implementation manner of the third aspect, the method further includes:
receiving, by the second user equipment, a random number generated in a process of verifying the account information and sent by the first user equipment;
generating, by the second user equipment, a first check value according to the random number; and
sending, by the second user equipment, the first check value to the first user equipment.

According to the third possible implementation manner of the third aspect, in a fourth possible implementation manner of the third aspect, after the sending, by the second user equipment, the account information to first user equipment through a wireless fidelity Wi-Fi network, the method further includes:
generating, by the second user equipment, a key according to the random number; and
sending, by the second user equipment, uplink data to the first user equipment through the Wi-Fi network, where the uplink data is encrypted by using the key, and the uplink data carries the identification information of the second user equipment.

With reference to the third aspect or the first to fourth possible implementation manners of the third aspect, in a fifth possible implementation manner of the third aspect, the first user equipment is user equipment that has a Wi-Fi function and a cellular network communication function; and
the second user equipment is user equipment that has a Wi-Fi function but does not have a cellular network communication function, where there are one or more second user equipments.

According to a fourth aspect of the present invention, a network access apparatus is provided, including:
a receiving module, configured to receive, through a wireless fidelity Wi-Fi network, account information sent by second user equipment;
a sending module, configured to send the account information received by the receiving module to a mobility management entity MME, so that the MME establishes, between the first user equipment and a gateway according to the account information, a dedicated bearer serving the second user equipment;
a confirming module, configured to: after the sending module sends the account information, determine that the establishment of the dedicated bearer is completed; and
a processing module, configured to: after the confirming module determines that the establishment of the dedicated bearer is completed, establish a mapping relationship between identification information of the second user equipment and the dedicated bearer.

In a first possible implementation manner of the fourth aspect, the receiving module is further configured to receive, by using the dedicated bearer, downlink data sent by the gateway; and
the sending module is further configured to send, through the Wi-Fi network according to the mapping relationship between the identification information of the second user equipment and the dedicated bearer, the downlink data to the second user equipment corresponding to the identification information of the second user equipment.

With reference to the fourth aspect or the first possible implementation manner of the fourth aspect, in a second possible implementation manner of the fourth aspect, the receiving module is further configured to receive, through the Wi-Fi network, uplink data sent by the second user equipment, where the uplink data carries the identification information of the second user equipment; and
the sending module is further configured to send the uplink data received by the receiving module to the gateway according to the mapping relationship, established by the processing module, between the identification information of the second user equipment and the dedicated bearer and by using the dedicated bearer corresponding to the identification information of the second user equipment received by the receiving module.

According to the second possible implementation manner of the fourth aspect, in a third possible implementation manner of the fourth aspect, the sending module is further configured to:
when the dedicated bearer is a bearer established on a newly established public data network PDN connection, before sending the uplink data to the gateway by using the dedicated bearer corresponding to the identification information of the second user equipment, confirm that the uplink data carries an Internet Protocol IP address allocated by the gateway for the second user equipment.

According to the second possible implementation manner of the fourth aspect, in a fourth possible implementation manner of the fourth aspect, the sending module is further configured to:
when the dedicated bearer is a bearer established on an existing PDN connection between the first user equipment and the gateway, before sending the uplink data to the gateway by using the dedicated bearer corresponding to the identification information of the second user equipment, confirm that the uplink data carries an IP address of the first user equipment.

With reference to the first to fourth possible implementation manners of the fourth aspect, in a fifth possible implementation manner of the fourth aspect, the receiving module is further configured to: after the account information is sent to the mobility management entity MME, and before the first user equipment confirms that the establishment of the dedicated bearer is completed, receive a random number generated in a process of verifying the account information and sent by the MME;
the sending module is further configured to send the random number received by the receiving module to the second user equipment;
the receiving module is further configured to receive a first check value that is generated according to the random number sent by the sending module and that is sent by the second user equipment; and
the sending module is further configured to send the first check value received by the receiving module to the MME.

According to the fifth possible implementation manner of the fourth aspect, in a sixth possible implementation manner of the fourth aspect, the receiving module is further configured to receive, through the Wi-Fi network, the uplink data sent by the second user equipment, where the uplink data is encrypted by using a key generated according to the random number, and the uplink data carries the identification information of the second user equipment; and
the sending module is further configured to send the uplink data encrypted by using the key to the gateway according to the mapping relationship, established by the processing module, between the identification information of the second user equipment and the dedicated bearer and by using the dedicated bearer corresponding to the identification information of the second user equipment.

According to the fifth possible implementation manner of the fourth aspect, in a seventh possible implementation manner of the fourth aspect, the receiving module is further configured to receive, on the dedicated bearer, the downlink data sent by the gateway to the second user equipment, where the downlink data is encrypted by using a key generated according to the random number; and
the sending module is further configured to send the downlink data encrypted by using the key to the second user equipment by means of Wi-Fi according to the mapping relationship, established by the processing module, between the identification information of the second user equipment and the dedicated bearer.

With reference to the fourth aspect or the first to seventh possible implementation manners of the fourth aspect, in an eighth possible implementation manner of the fourth aspect, the apparatus further includes:
an acquiring module, configured to: before the account information sent by the second user equipment is received through the wireless fidelity Wi-Fi network, acquire a short range communication-identity SRC-ID configured by a base station for the first user equipment; and
a broadcasting module, configured to broadcast, in the Wi-Fi network, the SRC-ID acquired by the acquiring module, so that the second user equipment accesses the first user equipment; or
the acquiring module is configured to request to acquire the SRC-ID from an application layer server; and
the broadcasting module is configured to broadcast, in the Wi-Fi network, the SRC-ID acquired by the acquiring module, so that the second user equipment accesses the first user equipment; or
the acquiring module is configured to select the SRC-ID from an SRC-ID list stored at an application layer; and
the broadcasting module is configured to broadcast, in the Wi-Fi network, the SRC-ID acquired by the acquiring module, so that the second user equipment accesses the first user equipment.

With reference to the fourth aspect or the first to eighth possible implementation manners of the fourth aspect, in a ninth possible implementation manner of the fourth aspect, the first user equipment is user equipment that has a Wi-Fi function and a cellular network communication function; and
the second user equipment is user equipment that has a Wi-Fi function but does not have a cellular network communication function, where there are one or more second user equipments.

According to a fifth aspect of the present invention, a network access apparatus is provided, including:
a receiving module, configured to receive account information of second user equipment sent by first user equipment, where the account information is sent by the second user equipment to the first user equipment through a wireless fidelity Wi-Fi network; and
a processing module, configured to establish, between the first user equipment and a gateway according to the account information received by the receiving module, a dedicated bearer serving the second user equipment.

In a first possible implementation manner of the fifth aspect, the apparatus further includes:
a sending module, configured to: after the receiving module receives the account information of the second user equipment sent by the first user equipment, send the account information to a home subscriber server HSS, so that the HSS verifies the second user equipment according to the account information, where
the processing module is further configured to: if determining that the verification succeeds, establish, between the first user equipment and the gateway, the dedicated bearer serving the second user equipment, so that after confirming that the establishment of the dedicated bearer is completed, the first user equipment establishes a mapping relationship between identification information of the second user equipment and the dedicated bearer.

According to the first possible implementation manner of the fifth aspect, in a second possible implementation manner of the fifth aspect, the receiving module is further configured to: after the sending module sends the account information to the home subscriber server HSS, receive a random number generated in a process of verifying the account information by the HSS and a second check value generated by the HSS;
the sending module is further configured to send the random number received by the receiving module to the first user equipment, so that the first user equipment sends the random number to the second user equipment, and receives a first check value generated according to the random number and sent by the second user equipment;
the receiving module is further configured to receive the first check value generated by the second user equipment according to the random number and sent by the first user equipment; and
the processing module is further configured to determine whether the second check value received by the receiving module is the same as the first check value received by the receiving module, and if yes, determine, by the MME, that the verification succeeds.

With reference to the fifth aspect or the first or second possible implementation manner of the fifth aspect, in a third possible implementation manner of the fifth aspect, the first user equipment is user equipment that has a Wi-Fi function and a cellular network communication function; and
the second user equipment is user equipment that has a Wi-Fi function but does not have a cellular network communication function, where there are one or more second user equipments.

According to a sixth aspect of the present invention, a network access apparatus is provided, including:
an acquiring module, configured to acquire account information; and
a sending module, configured to send the account information to first user equipment through a wireless fidelity Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network.

In a first possible implementation manner of the sixth aspect, the apparatus further includes:
a receiving module, configured to: before the sending module sends the account information to the first user equipment through the wireless fidelity Wi-Fi network, receive a short range communication-identity SRC-ID that is broadcast by the first user equipment in the Wi-Fi network; and
a processing module, configured to access the first user equipment in the Wi-Fi network according to the SRC-ID received by the receiving module.

With reference to the sixth aspect or the first possible implementation manner of the sixth aspect, in a second possible implementation manner of the sixth aspect, the sending module is further configured to send uplink data to the first user equipment through the Wi-Fi network, where the uplink data carries the identification information of the second user equipment, and the identification information of the second user equipment is used for distinguishing the second user equipment that accesses the first user equipment through the Wi-Fi network.

With reference to the sixth aspect or the first possible implementation manner of the sixth aspect, in a third possible implementation manner of the sixth aspect, the receiving module is further configured to receive a random number generated in a process of verifying the account information and sent by the first user equipment;
the processing module is further configured to generate a first check value according to the random number received by the receiving module; and
the sending module is further configured to send the first check value generated by the processing module to the first user equipment.

According to the third possible implementation manner of the sixth aspect, in a fourth possible implementation manner of the sixth aspect, the processing module is further configured to: after the account information is sent to the first user equipment through the wireless fidelity Wi-Fi network, generate a key according to the random number; and
the sending module is further configured to send uplink data to the first user equipment through the Wi-Fi network, where the uplink data is encrypted by using the key, and the uplink data carries the identification information of the second user equipment.

With reference to the sixth aspect or the first to fourth possible implementation manners of the sixth aspect, in a fifth possible implementation manner of the sixth aspect, the first user equipment is user equipment that has a Wi-Fi function and a cellular network communication function; and
the second user equipment is user equipment that has a Wi-Fi function but does not have a cellular network communication function, where there are one or more second user equipments.

According to a seventh aspect of the present invention, a network access apparatus is provided, including:
a receiver, configured to receive, through a wireless fidelity Wi-Fi network, account information sent by second user equipment;
a transmitter, configured to send the account information received by the receiver to a mobility management entity MME, so that the MME establishes, between the first user equipment and a gateway according to the account information, a dedicated bearer serving the second user equipment; and
a processor, configured to: after the transmitter sends the account information, determine that the establishment of the dedicated bearer is completed, and establish a mapping relationship between identification information of the second user equipment and the dedicated bearer.

In a first possible implementation manner of the seventh aspect, the receiver is further configured to receive, by using the dedicated bearer, downlink data sent by the gateway; and
the transmitter is further configured to send, through the Wi-Fi network according to the mapping relationship between the identification information of the second user equipment and the dedicated bearer, the downlink data to the second user equipment corresponding to the identification information of the second user equipment.

With reference to the seventh aspect or the first possible implementation manner of the seventh aspect, in a second possible implementation manner of the seventh aspect, the receiver is further configured to receive, through the Wi-Fi network, uplink data sent by the second user equipment, where the uplink data carries the identification information of the second user equipment; and
the transmitter is further configured to send the uplink data received by the receiver to the gateway according to the mapping relationship, established by the processor, between the identification information of the second user equipment and the dedicated bearer and by using the dedicated bearer corresponding to the identification information of the second user equipment received by the receiver.

According to the second possible implementation manner of the seventh aspect, in a third possible implementation manner of the seventh aspect, the transmitter is further configured to:
when the dedicated bearer is a bearer established on a newly established public data network PDN connection, before sending the uplink data to the gateway by using the dedicated bearer corresponding to the identification information of the second user equipment, confirm that the uplink data carries an Internet Protocol IP address allocated by the gateway for the second user equipment.

According to the second possible implementation manner of the seventh aspect, in a fourth possible implementation manner of the seventh aspect, the transmitter is further configured to:
when the dedicated bearer is a bearer established on an existing PDN connection between the first user equipment and the gateway, before sending the uplink data to the gateway by using the dedicated bearer corresponding to the identification information of the second user equipment, confirm that the uplink data carries an IP address of the first user equipment.

With reference to the first to fourth possible implementation manners of the seventh aspect, in a fifth possible implementation manner of the seventh aspect, the receiver is further configured to: after the account information is sent to the mobility management entity MME, and before the first user equipment confirms that the establishment of the dedicated bearer is completed, receive a random number generated in a process of verifying the account information and sent by the MME;
the transmitter is further configured to send the random number received by the receiver to the second user equipment;
the receiver is further configured to receive a first check value that is generated according to the random number sent by the transmitter and that is sent by the second user equipment; and
the transmitter is further configured to send the first check value received by the receiver to the MME.

According to the fifth possible implementation manner of the seventh aspect, in a sixth possible implementation manner of the seventh aspect, the receiver is further configured to receive, through the Wi-Fi network, the uplink data sent by the second user equipment, where the uplink data is encrypted by using a key generated according to the random number, and the uplink data carries the identification information of the second user equipment; and
the transmitter is further configured to send the uplink data encrypted by using the key to the gateway according to the mapping relationship, established by the processor, between the identification information of the second user equipment and the dedicated bearer and by using the dedicated bearer corresponding to the identification information of the second user equipment.

According to the fifth possible implementation manner of the seventh aspect, in a seventh possible implementation manner of the seventh aspect, the receiver is further configured to receive, on the dedicated bearer, the downlink data sent by the gateway to the second user equipment, where the downlink data is encrypted by using a key generated according to the random number; and
the transmitter is further configured to send the downlink data encrypted by using the key to the second user equipment by means of Wi-Fi according to the mapping relationship, established by the processor, between the identification information of the second user equipment and the dedicated bearer.

With reference to the seventh aspect or the first to seventh possible implementation manners of the seventh aspect, in an eighth possible implementation manner of the seventh aspect, the processor is further configured to: before the account information sent by the second user equipment is received through the wireless fidelity Wi-Fi network, acquire a short range communication-identity SRC-ID configured by a base station for the first user equipment, and broadcast the SRC-ID in the Wi-Fi network, so that the second user equipment accesses the first user equipment; or
the processor is further configured to request to acquire the SRC-ID from an application layer server, and broadcast the SRC-ID in the Wi-Fi network, so that the second user equipment accesses the first user equipment; or
the processor is further configured to select the SRC-ID from an SRC-ID list stored at an application layer, and broadcast the SRC-ID in the Wi-Fi network, so that the second user equipment accesses the first user equipment.

With reference to the seventh aspect or the first to eighth possible implementation manners of the seventh aspect, in a ninth possible implementation manner of the seventh aspect, the first user equipment is user equipment that has a Wi-Fi function and a cellular network communication function; and
the second user equipment is user equipment that has a Wi-Fi function but does not have a cellular network communication function, where there are one or more second user equipments.

According to an eighth aspect of the present invention, a network access apparatus is provided, including:
a receiver, configured to receive account information of second user equipment sent by first user equipment, where the account information is sent by the second user equipment to the first user equipment through a wireless fidelity Wi-Fi network; and
a processor, configured to establish, between the first user equipment and a gateway according to the account information received by the receiver, a dedicated bearer serving the second user equipment.

In a first possible implementation manner of the eighth aspect, the apparatus further includes:
a transmitter, configured to: after the receiver receives the account information of the second user equipment sent by the first user equipment, send the account information to a home subscriber server HSS, so that the HSS verifies the second user equipment according to the account information, where
the processor is further configured to: if determining that the verification succeeds, establish, between the first user equipment and the gateway, the dedicated bearer serving the second user equipment, so that after confirming that the establishment of the dedicated bearer is completed, the first user equipment establishes a mapping relationship between identification information of the second user equipment and the dedicated bearer.

According to the first possible implementation manner of the eighth aspect, in a second possible implementation manner of the eighth aspect, the receiver is further configured to: after the transmitter sends the account information to the home subscriber server HSS, receive a random number generated in a process of verifying the account information by the HSS and a second check value generated by the HSS;
the transmitter is further configured to send the random number received by the receiver to the first user equipment, so that the first user equipment sends the random number to the second user equipment, and receives a first check value generated according to the random number and sent by the second user equipment;
the receiver is further configured to receive the first check value generated by the second user equipment according to the random number and sent by the first user equipment; and
the processor is further configured to determine whether the second check value received by the receiver is the same as the first check value received by the receiver, and if yes, determine, by the MME, that the verification succeeds.

With reference to the eighth aspect or the first or second possible implementation manner of the eighth aspect, in a second possible implementation manner of the third aspect, the first user equipment is user equipment that has a Wi-Fi function and a cellular network communication function; and
the second user equipment is user equipment that has a Wi-Fi function but does not have a cellular network communication function, where there are one or more second user equipments.

According to a ninth aspect of the present invention, a network access apparatus is provided, including:
a processor, configured to acquire account information; and
a transmitter, configured to send the account information to first user equipment through a wireless fidelity Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network.

In a first possible implementation manner of the ninth aspect, the apparatus further includes:
a receiver, configured to: before the transmitter sends the account information to the first user equipment through the wireless fidelity Wi-Fi network, receive a short range communication-identity SRC-ID that is broadcast by the first user equipment in the Wi-Fi network, and
the processor is configured to access the first user equipment in the Wi-Fi network according to the SRC-ID received by the receiver.

With reference to the ninth aspect or the first possible implementation manner of the ninth aspect, in a second possible implementation manner of the ninth aspect, the transmitter is further configured to send uplink data to the first user equipment through the Wi-Fi network, where the uplink data carries the identification information of the second user equipment, and the identification information of the second user equipment is used for distinguishing the second user equipment that accesses the first user equipment through the Wi-Fi network.

With reference to the ninth aspect or the first possible implementation manner of the ninth aspect, in a third possible implementation manner of the ninth aspect, the receiver is further configured to receive a random number generated in a process of verifying the account information and sent by the first user equipment;
the processor is further configured to generate a first check value according to the random number received by the receiver; and
the transmitter is further configured to send the first check value generated by the processor to the first user equipment.

According to the third possible implementation manner of the ninth aspect, in a fourth possible implementation manner of the ninth aspect, the processor is further configured to: after the account information is sent to the first user equipment through the wireless fidelity Wi-Fi network, generate a key according to the random number; and
the transmitter is further configured to send uplink data to the first user equipment through the Wi-Fi network, where the uplink data is encrypted by using the key, and the uplink data carries the identification information of the second user equipment.

With reference to the ninth aspect or the first to fourth possible implementation manners of the ninth aspect, in a fifth possible implementation manner of the ninth aspect, the first user equipment is user equipment that has a Wi-Fi function and a cellular network communication function; and
the second user equipment is user equipment that has a Wi-Fi function but does not have a cellular network communication function, where there are one or more second user equipments.

According to a tenth aspect, a network system is provided, including: the network access apparatus according to the fourth aspect or any possible implementation manner of the fourth aspect or according to the seventh aspect or any possible implementation manner of the seventh aspect, the network access apparatus according to the fourth aspect or any possible implementation manner of the fourth aspect or according to the eighth aspect or any possible implementation manner of the eighth aspect, and the network access apparatus according to the fourth aspect or any possible implementation manner of the fourth aspect or according to the ninth aspect or any possible implementation manner of the ninth aspect.

The embodiments of the present invention provide a network access method and apparatus, and a network system, where first user equipment first receives, through a Wi-Fi network, account information sent by second user equipment, and then sends the account information to an MME, so that the MME establishes, between the first user equipment and a gateway according to the account information, a dedicated bearer serving the second user equipment, and after confirming that the establishment of the dedicated bearer is completed, the first user equipment establishes a mapping relationship between identification information of the second user equipment and the dedicated bearer, where the identification information of the second user equipment is used for distinguishing the second user equipment that accesses the first user equipment through the Wi-Fi network. In this way, data between the second user equipment and a cellular network is transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of an embodiment of a network access method according to the present invention;
FIG. 2A is a flowchart of another embodiment of a network access method according to the present invention;
FIG. 2B is a schematic structural diagram of a control plane protocol stack of another embodiment of a network access method according to the present invention;
FIG. 2C is a schematic structural diagram of a user plane protocol stack of another embodiment of a network access method according to the present invention;
FIG. 3A is a flowchart of still another embodiment of a network access method according to the present invention;
FIG. 3B is a schematic structural diagram of a user plane protocol stack of still another embodiment of a network access method according to the present invention;
FIG. 4 is a flowchart of yet another embodiment of a network access method according to the present invention;
FIG. 5 is a flowchart of yet another embodiment of a network access method according to the present invention;
FIG. 6 is a flowchart of yet another embodiment of a network access method according to the present invention;
FIG. 7 is a flowchart of yet another embodiment of a network access method according to the present invention;
FIG. 8 is a flowchart of yet another embodiment of a network access method according to the present invention;
FIG. 9 is a flowchart of yet another embodiment of a network access method according to the present invention;
FIG. 10A and FIG. 10B are a flowchart of yet another embodiment of a network access method according to the present invention;
FIG. 11 is a schematic structural diagram of an embodiment of a network access apparatus according to the present invention;
FIG. 12 is a schematic structural diagram of another embodiment of a network access apparatus according to the present invention;
FIG. 13 is a schematic structural diagram of still another embodiment of a network access apparatus according to the present invention;
FIG. 14 is a schematic structural diagram of yet another embodiment of a network access apparatus according to the present invention;
FIG. 15 is a schematic structural diagram of yet another embodiment of a network access apparatus according to the present invention;
FIG. 16 is a schematic structural diagram of yet another embodiment of a network access apparatus according to the present invention;
FIG. 17 is a schematic structural diagram of yet another embodiment of a network access apparatus according to the present invention;
FIG. 18 is a schematic structural diagram of yet another embodiment of a network access apparatus according to the present invention;
FIG. 19 is a schematic structural diagram of yet another embodiment of a network access apparatus according to the present invention; and
FIG. 20 is a schematic structural diagram of an embodiment of a network system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

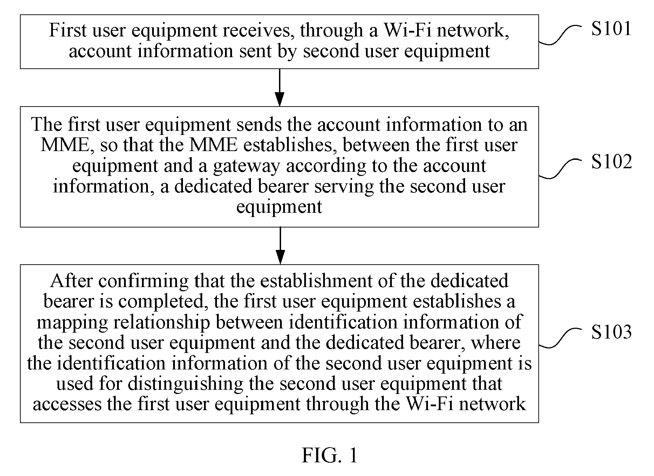

FIG. 1 is a flowchart of an embodiment of a network access method according to the present invention. As shown in FIG. 1, the network access method in this embodiment includes:

S101: First user equipment receives, through a Wi-Fi network, account information sent by second user equipment.

Specifically, the first user equipment may be user equipment that has a Wi-Fi function and a cellular network communication function, for example, may be existing user equipment such as a smartphone; and the second user equipment may be user equipment that has a Wi-Fi function but does not have a cellular network communication function, where there are one or more second user equipments, for example, the second user equipment may be user equipment that supports a Wi-Fi function but does not support a cellular network, such as a tablet computer or an e-book. A scenario to which this embodiment is applicable may be that the second user equipment accesses the cellular network by using the first user equipment. The account information of the second user equipment may be account information purchased by a user from an operator to access the cellular network in a place covered by a Wi-Fi hot spot, and may include authentication information for the second user equipment to access the cellular network and a basis of charging the second user equipment after access to the cellular network, for example, may be information such as a username or a password.

S102: The first user equipment sends the account information to an MME, so that the MME establishes, between the first user equipment and a gateway according to the account information, a dedicated bearer serving the second user equipment.

Specifically, after receiving, through the Wi-Fi network, the account information sent by the second user equipment, the first user equipment sends the account information of the second user equipment to the mobility management entity (Mobility Management Entity, MME for short) in the cellular network, so that the MME establishes, between the first user equipment and the gateway according to the account information, the dedicated bearer serving the second user equipment, where a process of establishing the dedicated bearer may be the same as an existing bearer establishment process in a Long Term Evolution (Long Term Evolution, LTE for short) system. In this way, data between the second user equipment and the cellular network is transmitted on the dedicated bearer, and therefore an incurred data transmission fee is paid by the second user equipment rather than paid by the first user equipment as done in the prior art, which solves a problem of charging, by a cellular network side, user equipment that has a Wi-Fi function but does not have a cellular network communication function in the prior art, thereby improving the possibility that the first user equipment serves as an access point to be used by the second user equipment, and further improving the possibility that the user equipment that has the Wi-Fi function but does not have the cellular network communication function accesses the cellular network in a place covered by a Wi-Fi hot spot.

S103: After confirming that the establishment of the dedicated bearer is completed, the first user equipment establishes a mapping relationship between identification information of the second user equipment and the dedicated bearer, where the identification information of the second user equipment is used for distinguishing the second user equipment that accesses the first user equipment through the Wi-Fi network.

Specifically, In the process of establishing, between the first user equipment and the gateway according to the account information, the dedicated bearer serving the second user equipment, the MME sends, to the first user equipment, a parameter of the established dedicated bearer, and the identification information of the second user equipment and the like carried in a NAS message, so that the first user equipment determines that the established bearer is the dedicated bearer established for the second user equipment corresponding to the received identification information of the second user equipment. Because multiple second user equipments may access the first user equipment, the first user equipment needs to establish a mapping relationship between identification information of the multiple second user equipments and multiple dedicated bearers, where the identification information of the second user equipment is used for distinguishing the second user equipment that accesses the first user equipment through the Wi-Fi network, so that during data transmission, the first user equipment can determine a corresponding dedicated bearer from the mapping relationship according to the identification information of the second user equipment. In this embodiment, the identification information of the second user equipment may be an internal IP address allocated by the first user equipment for the second user equipment that accesses the first user equipment. It may be understood that, the identification information of the second user equipment in this embodiment may also be information that can be used for distinguishing the second user equipment, such as a device ID or sequence number.

According to the network access method provided in this embodiment, first user equipment first receives, through a Wi-Fi network, account information sent by second user equipment, and then sends the account information to an MME, so that the MME establishes, between the first user equipment and a gateway according to the account information, a dedicated bearer serving the second user equipment, and after confirming that the establishment of the dedicated bearer is completed, the first user equipment establishes a mapping relationship between identification information of the second user equipment and the dedicated bearer, where the identification information of the second user equipment is used for distinguishing the second user equipment that accesses the first user equipment through the Wi-Fi network. In this way, data between the second user equipment and a cellular network is transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot.

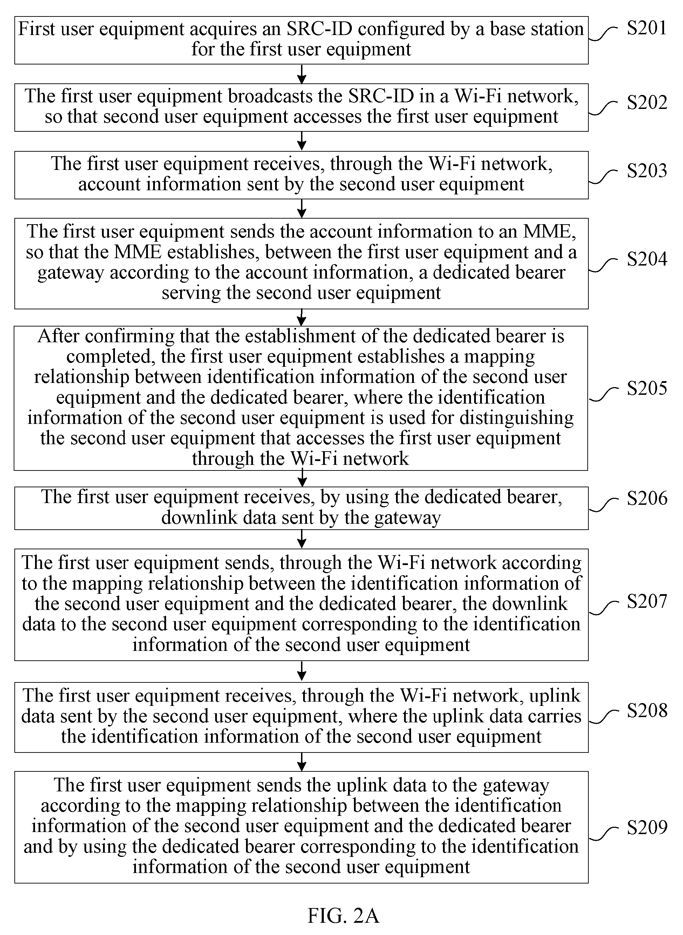

FIG. 2A is a flowchart of another embodiment of a network access method according to the present invention. As shown in FIG. 2A, in the network access method in this embodiment, based on the embodiment shown in FIG. 1, a data transmission process after the second user equipment accesses the cellular network is described; and the method includes:
S201: First user equipment acquires an SRC-ID configured by a base station for the first user equipment.

Optionally, other two possible implementation manners of S201 may include:
requesting, by first user equipment, to acquire an SRC-ID from an application layer server; or
selecting, by first user equipment, an SRC-ID from an SRC-ID list stored at an application layer.

Specifically, with respect to that user equipment that has both a Wi-Fi function and a cellular network communication function becomes the first user equipment, the following three scenarios may be included:

First scenario: A base station selects first user equipment according to one or more of a user will, a device support capability, channel quality, subscription information, or other information, and configures a short range communication-identity (Short Range Communication-Identity, SRC-ID for short) for the first user equipment.

Second scenario: A user actively requests to acquire an SRC-ID from an application layer server according to a factor such as a will or a device support capability, where the application layer server may be located in a cellular network, may be located on an existing node such as a base station or an MME, and may also be a newly added independent node.

Third scenario: First user equipment selects an SRC-ID from an SRC-ID list stored at an application layer, where the APP layer of the user equipment directly stores the SRC-ID list, the user equipment can select an SRC-ID when required, and the user equipment can directly actively become first user equipment without making a statement to any node.

In the second and third scenarios, user equipment that has both a Wi-Fi function and a cellular network communication function can more flexibly decide whether to be first user equipment according to a will thereof.

S202: The first user equipment broadcasts the SRC-ID in a Wi-Fi network, so that second user equipment accesses the first user equipment.

The first user equipment broadcasts the SRC-ID in the Wi-Fi network, so that second user equipment that subscribes to a same operator with the first user equipment can make access through the Wi-Fi network.

S203: The first user equipment receives, through the Wi-Fi network, account information sent by the second user equipment.

It may be understood that, before the second user equipment sends the account information to the first user equipment, the second user equipment needs to access the first user equipment first, where an access process may be the same as an access process in the prior art, and after the access, the first user equipment allocates an internal IP address for each second user equipment that accesses the first user equipment.

S204: The first user equipment sends the account information to an MME, so that the MME establishes, between the first user equipment and a gateway according to the account information, a dedicated bearer serving the second user equipment.

For example, after receiving the account information sent by the second user equipment, the first user equipment may package the account information into a non-access stratum (Non-Access Stratum, NAS for short) message and send the NAS message to the MME, and because one first user equipment may serve multiple second user equipments, an additional internal device identity needs to be added to the NAS message, so as to distinguish the second user equipment on which a subsequent network-side operation is performed.

After the first user equipment sends the account information to the MME, the MME authenticates the account information in a home subscriber server (Home Subscriber Server, HSS for short) or another authentication entity, and if finding that the account is a legal account in the operator and an account amount meets a requirement, the MME triggers establishment, for the second user equipment, of the dedicated bearer between the first user equipment and the gateway.

S205: After confirming that the establishment of the dedicated bearer is completed, the first user equipment establishes a mapping relationship between identification information of the second user equipment and the dedicated bearer, where the identification information of the second user equipment is used for distinguishing the second user equipment that accesses the first user equipment through the Wi-Fi network.

S206: The first user equipment receives, by using the dedicated bearer, downlink data sent by the gateway.

S207: The first user equipment sends, through the Wi-Fi network according to the mapping relationship between the identification information of the second user equipment and the dedicated bearer, the downlink data to the second user equipment corresponding to the identification information of the second user equipment.

Specifically, after the establishment of the dedicated bearer is completed, if the first user equipment receives, by using the dedicated bearer, downlink data sent by the gateway, the first user equipment sends, through the Wi-Fi network according to the mapping relationship between the identification information of the second user equipment and the dedicated bearer, the downlink data to the second user equipment corresponding to the identification information of the second user equipment.

S208: The first user equipment receives, through the Wi-Fi network, uplink data sent by the second user equipment, where the uplink data carries the identification information of the second user equipment.

S209: The first user equipment sends the uplink data to the gateway according to the mapping relationship between the identification information of the second user equipment and the dedicated bearer and by using the dedicated bearer corresponding to the identification information of the second user equipment.

Specifically, if the second user equipment needs to send uplink data to the cellular network, the second user equipment first adds the identification information of the second user equipment to to-be-sent uplink data, and then sends, to the first user equipment, the uplink data that carries the identification information of the second user equipment, and after receiving the uplink data that carries the identification information of the second user equipment, the first user equipment sends the uplink data to the gateway according to the mapping relationship between the identification information of the second user equipment and the dedicated bearer and by using the dedicated bearer corresponding to the identification information of the second user equipment.

Optionally, if the dedicated bearer is a bearer established on a newly established public data network (Public Data Network, PDN for short) connection, before S209, the method may include: confirming, by the first user equipment, that the uplink data carries an Internet Protocol (Internet Protocol, IP for short) address allocated by the gateway for the second user equipment; or
if the dedicated bearer is a bearer established on an existing PDN connection between the first user equipment and the gateway, before S209, the method may include: confirming, by the first user equipment, that the uplink data carries an IP address of the first user equipment.

Specifically, if the dedicated bearer is a bearer established on the newly established PDN connection, the gateway newly allocates an IP address for the second user equipment; and the first user equipment adds, to the uplink data, the IP address allocated by the gateway for the second user equipment, and then sends the uplink data to the gateway. Because the uplink data sent by the second user equipment through the Wi-Fi network and received by the first user equipment carries an internal IP address of the second user equipment, S207 may specifically be: replacing, by the first user equipment, the internal IP address in the uplink data with the IP address allocated by the gateway for the second user equipment, and sending the uplink data to the gateway; or
if the dedicated bearer is a bearer established on the existing PDN connection between the first user equipment and the gateway, the second user equipment and the first user equipment share the IP address of the first user equipment, and therefore S207 may specifically be: replacing, by the first user equipment, an internal IP address in the uplink data with the IP address of the first user equipment, and then sending the uplink data to the gateway.

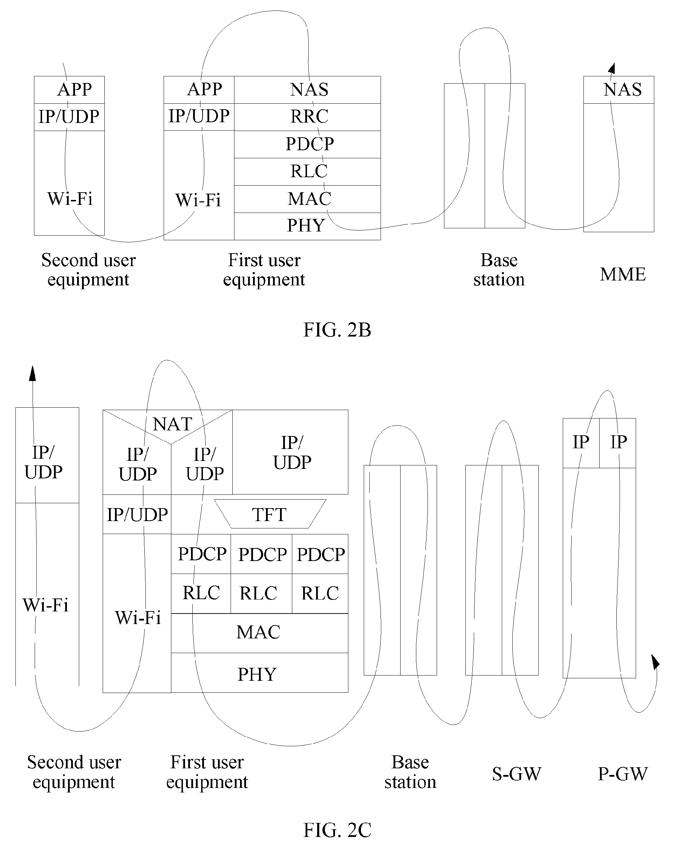

FIG. 2B is a schematic structural diagram of a control plane protocol stack of another embodiment of a network access method according to the present invention. As shown in FIG. 2B, a function of an APP layer on second user equipment is generating a packet in a specific format, where the packet includes account information, and an APP layer on a side of first user equipment receives the packet in the specific format, and then extracts the account information and sends the account information to a NAS layer to perform processing.

As compared with a control plane protocol stack in the prior art, the application (Application, APP for short) layer on the side of the first user equipment further has a filter function, that is, when a dedicated bearer for second user equipment has been established in the first user equipment, and a mapping relationship between identification information of the second user equipment and the dedicated bearer exists already, the APP layer becomes transparent; however, if a dedicated bearer for second user equipment has not been established in S-UE yet, the APP layer rejects all data from the device, and allows only a data packet carrying account information to pass.

FIG. 2C is a schematic structural diagram of a user plane protocol stack of another embodiment of a network access method according to the present invention. As shown in FIG. 2C, a packet data network-gateway (PDN-Gateway, P-GW for short) may separately allocate an IP address for second user equipment, and the second user equipment may also share an IP address with first user equipment, which depends on a process performed when a bearer is established for the second user equipment, where if the dedicated bearer is established on a PDN connection, an IP address newly allocated by the P-GW for the second user equipment is used; otherwise, an IP address is shared with the first user equipment.

Both the newly allocated IP address and the shared IP address are added after data reaches the first user equipment, on an end of the second user equipment, only an internal IP address allocated by the first user equipment for the second user equipment is added, and after the data reaches the first user equipment, the first user equipment removes the internal IP address, and then adds the IP address newly allocated by the P-GW for the second user equipment or the IP address shared with the first user equipment.

A function of a network address translation (Network Address Translation, NAT for short) layer in the first user equipment is replacing the internal IP address received from the second user equipment with the IP address newly allocated by the P-GW for the second user equipment or the IP address shared with the first user equipment, and a function of a traffic flow template (Traffic Flow Template, TFT for short) in the first user equipment is ensuring that a data packet is filtered out and sent to the dedicated bearer of the second user equipment.

Acording to the network access method provided in this embodiment, first user equipment first receives, through a Wi-Fi network, account information sent by second user equipment, and then sends the account information to an MME, so that the MME establishes, between the first user equipment and a gateway according to the account information, a dedicated bearer serving the second user equipment, after confirming that the establishment of the dedicated bearer is completed, the first user equipment establishes a mapping relationship between identification information of the second user equipment and the dedicated bearer, and for data transmission after access, if the first user equipment receives, by using the dedicated bearer, downlink data sent by the gateway, the first user equipment sends, through the Wi-Fi network according to the mapping relationship between the identification information of the second user equipment and the dedicated bearer, the downlink data to the second user equipment corresponding to the identification information of the second user equipment; and if the first user equipment receives, through the Wi-Fi network, uplink data sent by the second user equipment, the first user equipment sends the uplink data to the gateway according to the mapping relationship between the identification information of the second user equipment and the dedicated bearer and by using the dedicated bearer corresponding to the identification information of the second user equipment. In this way, data between the second user equipment and a cellular network is transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot.

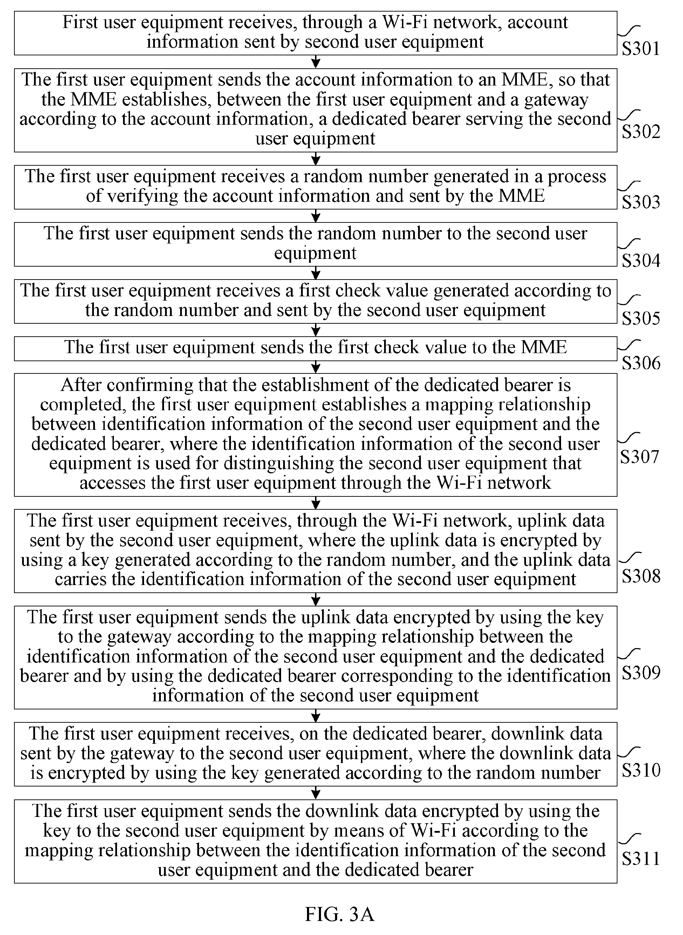

FIG. 3A is a flowchart of still another embodiment of a network access method according to the present invention. As shown in FIG. 3A, in the network access method in this embodiment, based on the embodiment shown in FIG. 1, a security problem of the account information of the second user equipment is further considered; and the method includes:
S301: First user equipment receives, through a Wi-Fi network, account information sent by second user equipment.
S302: The first user equipment sends the account information to an MME, so that the MME establishes, between the first user equipment and a gateway according to the account information, a dedicated bearer serving the second user equipment.
S303: The first user equipment receives a random number generated in a process of verifying the account information and sent by the MME.

Because in the embodiment shown in FIG. 2, there is a risk: the first user equipment thieves the account information of the second user equipment and sends data of the first user equipment by using the dedicated bearer of the second user equipment so that a fee is paid by the second user equipment, in this embodiment, a security verification process executed by using an encryption mechanism is performed before the dedicated bearer of the second user equipment is established, to ensure that the first user equipment cannot establish a bearer for the first user equipment even through the first user equipment acquires the account information of the second user equipment.

After the first user equipment sends the account information to the MME, the MME sends the account information to an HSS or another authentication entity, the HSS or the another authentication entity generates a random number and a second check value according to the account information, and sends the random number and the second check value to the MME, and the MME then sends the random number to the first user equipment.

S304: The first user equipment sends the random number to the second user equipment.

The first user equipment sends the received random number to the second user equipment through the Wi-Fi network. It may be understood that, information, such as a device identity, carried in the account information sent to the MME is delivered together with the random number, so that the first user equipment sends the random number to the second user equipment corresponding to the device identity.

S305: The first user equipment receives a first check value generated according to the random number and sent by the second user equipment.

The second user equipment generates the first check value according to the received random number and the account information of the second user equipment, and sends the first check value to the first user equipment.

S306: The first user equipment sends the first check value to the MME.

After the first user equipment sends the first check value to the MME, the MME determines whether the second check value received from the HSS or the another authentication entity is equal to the first check value received from the first user equipment, and if the two are equal, the MME establishes a dedicated bearer for the second user equipment; otherwise, the MME does not establish a dedicated bearer.

The second user equipment may generate the first check value and a key Kc according to the random number. Because the account information (for example, a username) and a password need to be used in the generation process, but the first user equipment can acquire only the account information (for example, a username) and cannot acquire a password of the second user equipment, the first user equipment cannot generate the first check value and the key Kc or generates an erroneous check value and key Kc, and therefore cannot succeed in the security verification process, and further cannot establish a dedicated bearer. Therefore, addition of the security verification process can ensure that the first user equipment cannot establish a bearer for the first user equipment even through the first user equipment acquires the account information of the second user equipment.

S307: After confirming that the establishment of the dedicated bearer is completed, the first user equipment establishes a mapping relationship between identification information of the second user equipment and the dedicated bearer, where the identification information of the second user equipment is used for distinguishing the second user equipment that accesses the first user equipment through the Wi-Fi network.

Specifically, the MME determines whether the second check value received from the HSS or the another authentication entity is equal to the first check value received from the first user equipment, and if the two are equal, the MME establishes a dedicated bearer for the second user equipment; otherwise, the MME does not establish a dedicated bearer. In this embodiment, a description is provided by using an example in which the second check value is equal to the first check value, and the MME establishes, between the first user equipment and a gateway according to the account information, a dedicated bearer serving the second user equipment. It may be understood that, if the second check value is not equal to the first check value, a dedicated bearer is not established, data transmission of the second user equipment cannot be performed.

S308: The first user equipment receives, through the Wi-Fi network, uplink data sent by the second user equipment, where the uplink data is encrypted by using a key generated according to the random number, and the uplink data carries the identification information of the second user equipment.

Because the second user equipment acquires the key Kc in the security verification process, when sending uplink data, the second user equipment encrypts the uplink data by using the key Kc, and adds, to the uplink data, an IP address allocated by the gateway for the second user equipment. In this embodiment, the addition of the IP address is performed in the second user equipment. Therefore, a difference between this embodiment and the embodiment shown in FIG. 2 lies in that: the IP in this embodiment is an IP address newly allocated by the gateway for the second user equipment, that is, the dedicated bearer is established on a newly established PDN connection, and the IP address cannot be an IP address shared with the first user equipment.

S309: The first user equipment sends the uplink data encrypted by using the key to the gateway according to the mapping relationship between the identification information of the second user equipment and the dedicated bearer and by using the dedicated bearer corresponding to the identification information of the second user equipment.

It may be understood that, in the process in which the first user equipment sends the uplink data to the gateway according to the mapping relationship between the identification information of the second user equipment and the dedicated bearer and by using the dedicated bearer corresponding to the identification information of the second user equipment, the first user equipment may first send the uplink data to a base station, and the base station may decrypt a data packet according to an acquired key Kc, and then send the decrypted data to the gateway; and if the first user equipment further encrypts the data packet before sending the uplink data, the base station needs to first decrypt the data according to encryption information of the first user equipment, and then decrypt the data packet by using the key Kc. In this way, all information transmitted on the dedicated bearer established for the second user equipment is encrypted by using encryption information (key Kc) of the second user equipment, thereby ensuring that because S-UE cannot decrypt the uplink data of the second user equipment, the S-UE cannot transmit data of the S-UE on the dedicated bearer.

S310: The first user equipment receives, on the dedicated bearer, downlink data sent by the gateway to the second user equipment, where the downlink data is encrypted by using the key generated according to the random number.

S311: The first user equipment sends the downlink data encrypted by using the key to the second user equipment by means of Wi-Fi according to the mapping relationship between the identification information of the second user equipment and the dedicated bearer.

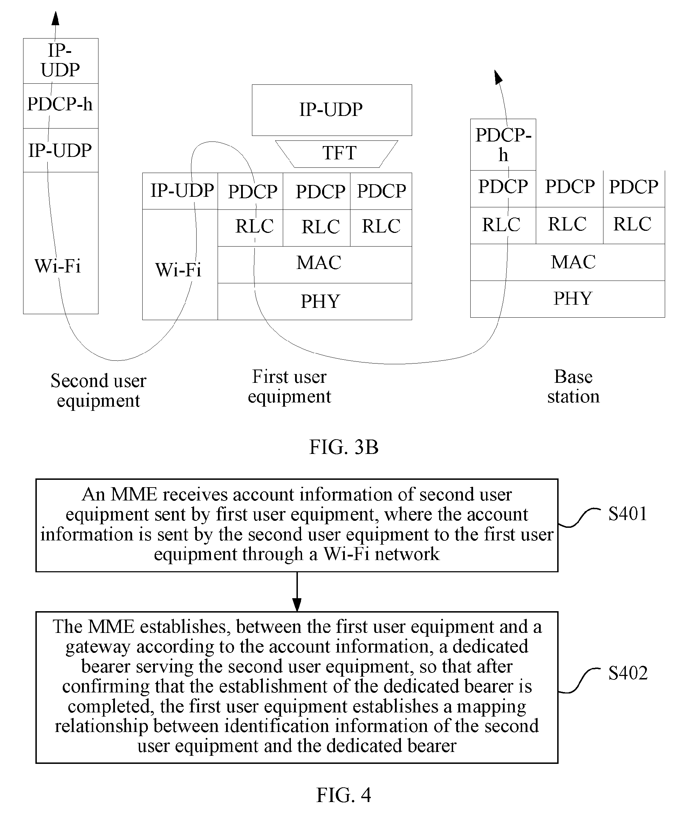

A schematic structural diagram of a control plane protocol stack of the devices in this embodiment is the same as FIG. 2B. FIG. 3B is a schematic structural diagram of a user plane protocol stack of Embodiment 3 of a network access method according to the present invention. As shown in FIG. 3B, second user equipment adds, to uplink data during generation of the uplink data, a header of an IP newly allocated by a P-GW for the second user equipment, then encrypts the uplink data at a Packet Data Convergence Protocol (Packet Data Convergence Protocol, PDCP-h for short) layer by using a key Kc, and then sends the uplink data to first user equipment by using an internal IP address; after finding a dedicated bearer to which the second user equipment is mapped, the first user equipment removes a header of the internal IP of the data, and sends the uplink data to a base station directly by using the dedicated bearer; and after receiving the uplink data on the dedicated bearer, the base station first performs decryption according to encryption information of a PDCP layer of the first user equipment (if the first user equipment does not perform encryption for the bearer, no decryption is required), and then sends the uplink data to a PDCP-h layer to perform encryption according to encryption information (key Kc) of the second user equipment. In this way, all information transmitted on the dedicated bearer established for the second user equipment is encrypted by using the encryption information (key Kc) of the second user equipment, thereby ensuring that S-UE cannot transmit data of the S-UE on the dedicated radio bearer. A difference between the user plane protocol stack of FIG. 3B and the user plane protocol stack shown in FIG. 2C mainly lies in that: the PDCP-h layer for encrypting data is added to the second user equipment, and because IP address translation does not need to be performed, no NAT layer is set in the first user equipment.

According to the network access method provided in this embodiment, first user equipment first receives, through a Wi-Fi network, account information sent by second user equipment, and then sends the account information to an MME; only after a security verification process succeeds, the MME establishes, between the first user equipment and a gateway according to the account information, a dedicated bearer serving the second user equipment; the first user equipment receives, through the Wi-Fi network, uplink data sent by the second user equipment, where the uplink data is encrypted by using a key generated according to a random number; the first user equipment sends the uplink data to the gateway according to a mapping relationship between identification information of the second user equipment and the dedicated bearer by using the dedicated bearer corresponding to the identification information of the second user equipment; the first user equipment receives, on the dedicated bearer, downlink data sent by the gateway to the second user equipment, where the downlink data is encrypted by using the key generated according to the random number; and the first user equipment sends the downlink data encrypted by using the key to the second user equipment by means of Wi-Fi according to the mapping relationship between the identification information of the second user equipment and the dedicated bearer. In this way, data between the second user equipment and a cellular network is transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot, and further avoiding a problem: the first user equipment thieves the account information of the second user equipment and sends data of the first user equipment by using the dedicated bearer of the second user equipment so that a fee is paid by the second user equipment.

FIG. 4 is a flowchart of yet another embodiment of a network access method according to the present invention. As shown in FIG. 4, the network access method in this embodiment includes:

S401: An MME receives account information of second user equipment sent by first user equipment, where the account information is sent by the second user equipment to the first user equipment through a Wi-Fi network.

S402: The MME establishes, between the first user equipment and a gateway according to the account information, a dedicated bearer serving the second user equipment, so that after confirming that the establishment of the dedicated bearer is completed, the first user equipment establishes a mapping relationship between identification information of the second user equipment and the dedicated bearer.

The first user equipment may be user equipment that has a Wi-Fi function and a cellular network communication function; and
the second user equipment may be user equipment that has a Wi-Fi function but does not have a cellular network communication function, where there are one or more second user equipments.

For descriptions of the first user equipment and the second user equipment in this embodiment, reference may be made to the embodiment shown in FIG. 1, and details are not described herein again.

According to the network access method provided in this embodiment, an MME receives account information of second user equipment sent by first user equipment, where the account information is sent by the second user equipment to the first user equipment through a Wi-Fi network, and establishes, between the first user equipment and a gateway according to the account information, a dedicated bearer serving the second user equipment. In this way, data between the second user equipment and a cellular network can be transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot.

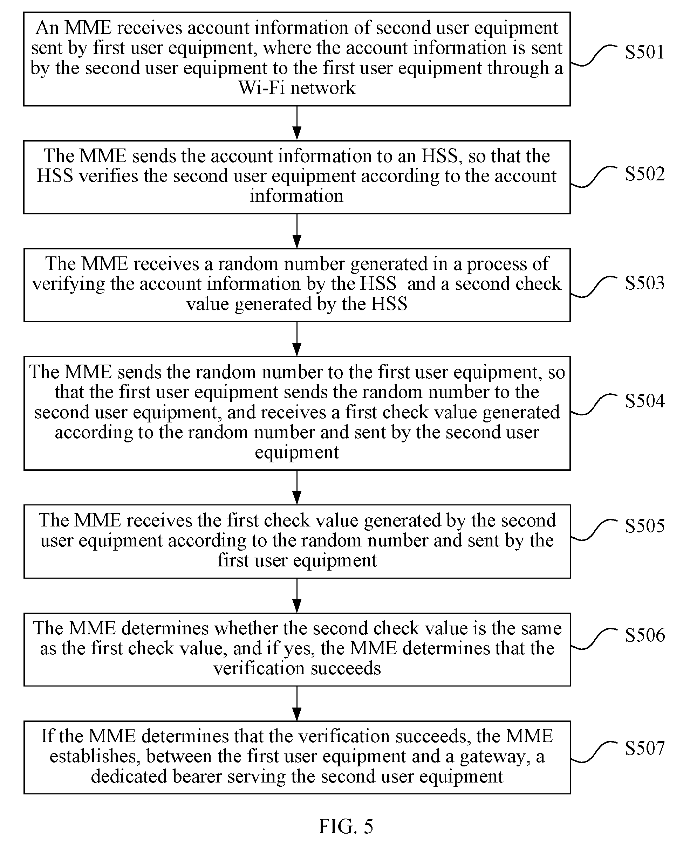

FIG. 5 is a flowchart of yet another embodiment of a network access method according to the present invention. As shown in FIG. 5, in the network access method in this embodiment, based on the embodiment shown in FIG. 4, a security problem of the account information of the second user equipment is further considered; and the method includes:
S501: An MME receives account information of second user equipment sent by first user equipment, where the account information is sent by the second user equipment to the first user equipment through a Wi-Fi network.
S502: The MME sends the account information to an HSS, so that the HSS verifies the second user equipment according to the account information.
S503: The MME receives a random number generated in a process of verifying the account information by the HSS and a second check value generated by the HSS.
S504: The MME sends the random number to the first user equipment, so that the first user equipment sends the random number to the second user equipment, and receives a first check value generated according to the random number and sent by the second user equipment.
S505: The MME receives the first check value generated by the second user equipment according to the random number and sent by the first user equipment.
S506: The MME determines whether the second check value is the same as the first check value, and if yes, the MME determines that the verification succeeds.
S507: If the MME determines that the verification succeeds, the MME establishes, between the first user equipment and a gateway, a dedicated bearer serving the second user equipment.

For descriptions of the first user equipment, the second user equipment, and related steps in this embodiment, reference may be made to the embodiment shown in FIG. 3, and details are not described herein again.

According to the network access method provided in this embodiment, an MME receives account information of second user equipment sent by first user equipment, and then sends the account information to an HSS to perform a security verification process, and if the MME determines that the verification succeeds, the MME establishes, between the first user equipment and a gateway, a dedicated bearer serving the second user equipment. In this way, data between the second user equipment and a cellular network is transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot, and further avoiding a problem: the first user equipment thieves the account information of the second user equipment and sends data of the first user equipment by using the dedicated bearer of the second user equipment so that a fee is paid by the second user equipment.

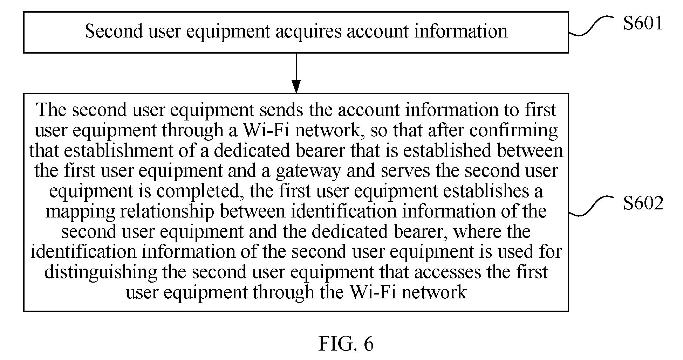

FIG. 6 is a flowchart of yet another embodiment of a network access method according to the present invention. As shown in FIG. 6, the network access method in this embodiment includes:
S601: Second user equipment acquires account information.
S602: The second user equipment sends the account information to first user equipment through a Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network.

The first user equipment may be user equipment that has a Wi-Fi function and a cellular network communication function; and
the second user equipment may be user equipment that has a Wi-Fi function but does not have a cellular network communication function, where there are one or more second user equipments.

For descriptions of the first user equipment and the MME in this embodiment, reference may be separately made to the embodiments shown in FIG. 1 and FIG. 4, and details are not described herein again.

According to the network access method provided in this embodiment, second user equipment acquires account information, and sends the account information to first user equipment through a Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network. In this way, data between the second user equipment and a cellular network can be transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot.

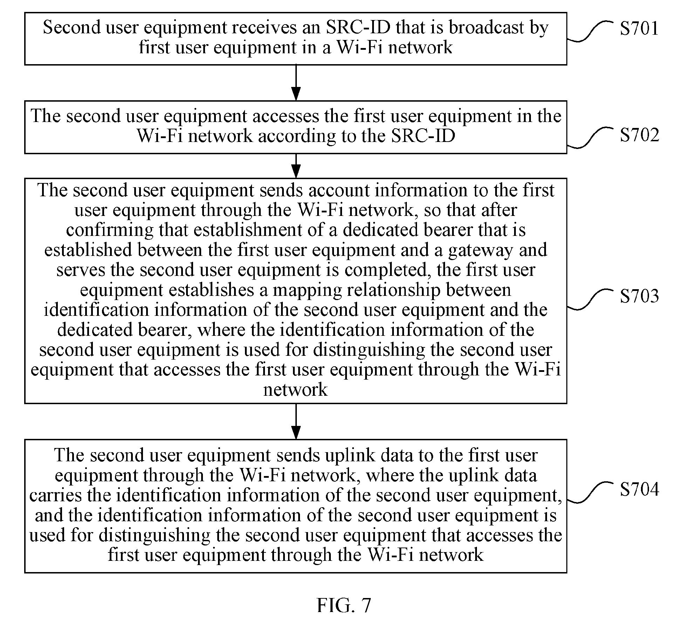

FIG. 7 is a flowchart of yet another embodiment of a network access method according to the present invention. As shown in FIG. 7, in the network access method in this embodiment, based on the embodiment shown in FIG. 6, a data transmission process after the second user equipment accesses a cellular network is described; and the method includes:
S701: Second user equipment receives an SRC-ID that is broadcast by first user equipment in a Wi-Fi network.
S702: The second user equipment accesses the first user equipment in the Wi-Fi network according to the SRC-ID.
S703: The second user equipment sends account information to the first user equipment through the Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network.
S704: The second user equipment sends uplink data to the first user equipment through the Wi-Fi network, where the uplink data carries the identification information of the second user equipment, and the identification information of the second user equipment is used for distinguishing the second user equipment that accesses the first user equipment through the Wi-Fi network.

It may be understood that, after receiving the uplink data, the first user equipment sends the uplink data to the gateway according to the mapping relationship between the identification information of the second user equipment and the dedicated bearer and by using the dedicated bearer corresponding to the identification information of the second user equipment.

For a description of steps in this embodiment and corresponding to the embodiment shown in FIG. 2, reference may be made to the embodiment shown in FIG. 2, and details are not described herein again.

According to the network access method provided in this embodiment, second user equipment receives an SRC-ID that is broadcast by first user equipment in a Wi-Fi network, accesses the first user equipment in the Wi-Fi network according to the SRC-ID, and sends account information to the first user equipment through the Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network; and after the second user equipment sends uplink data to the first user equipment through the Wi-Fi network, the first user equipment sends the uplink data to the gateway according to the mapping relationship between the identification information of the second user equipment and the dedicated bearer and by using the dedicated bearer corresponding to the identification information of the second user equipment. In this way, data between the second user equipment and a cellular network can be transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot.

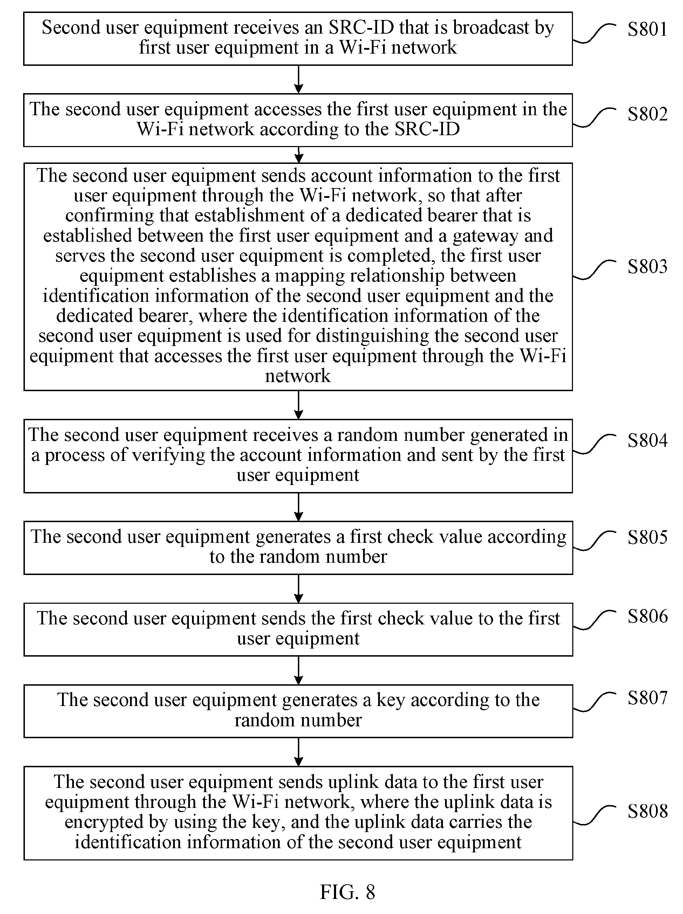

FIG. 8 is a flowchart of yet another embodiment of a network access method according to the present invention. As shown in FIG. 8, in the network access method in this embodiment, based on the embodiment shown in FIG. 6, a security problem of the account information of the second user equipment is further considered; the method includes:
S801: Second user equipment receives an SRC-ID that is broadcast by first user equipment in a Wi-Fi network.
S802: The second user equipment accesses the first user equipment in the Wi-Fi network according to the SRC-ID.
S803: The second user equipment sends account information to the first user equipment through the Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network.
S804: The second user equipment receives a random number generated in a process of verifying the account information and sent by the first user equipment.
S805: The second user equipment generates a first check value according to the random number.
S806: The second user equipment sends the first check value to the first user equipment.

Then the first user equipment sends the first check value to an MME, and the MME determines whether the first check value is the same as a second check value received from an HSS, and if the two are the same, the MME establishes, between the first user equipment and the gateway, the dedicated bearer serving the second user equipment.

S807: The second user equipment generates a key according to the random number.

S808: The second user equipment sends uplink data to the first user equipment through the Wi-Fi network, where the uplink data is encrypted by using the key, and the uplink data carries the identification information of the second user equipment.

For a description of steps in this embodiment and corresponding to the embodiment shown in FIG. 3, reference may be made to the embodiment shown in FIG. 3, and details are not described herein again.

According to the network access method provided in this embodiment, second user equipment receives a random number generated in a process of verifying account information and sent by first user equipment, generates a first check value according to the random number, and sends the first check value to the first user equipment; the first user equipment sends the first check value to an MME, the MME determines whether the first check value is the same as a second check value received from an HSS, and if the two are the same, the MME establishes, between the first user equipment and a gateway, a dedicated bearer serving the second user equipment, and the second user equipment encrypts uplink data by using a key. In this way, data between the second user equipment and a cellular network is transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot, and further avoiding a problem: the first user equipment thieves the account information of the second user equipment and sends data of the first user equipment by using the dedicated bearer of the second user equipment so that a fee is paid by the second user equipment.

The network access method provided in the present invention is described below in detail according to a process of interaction between first user equipment, second user equipment, and a network-side network element.

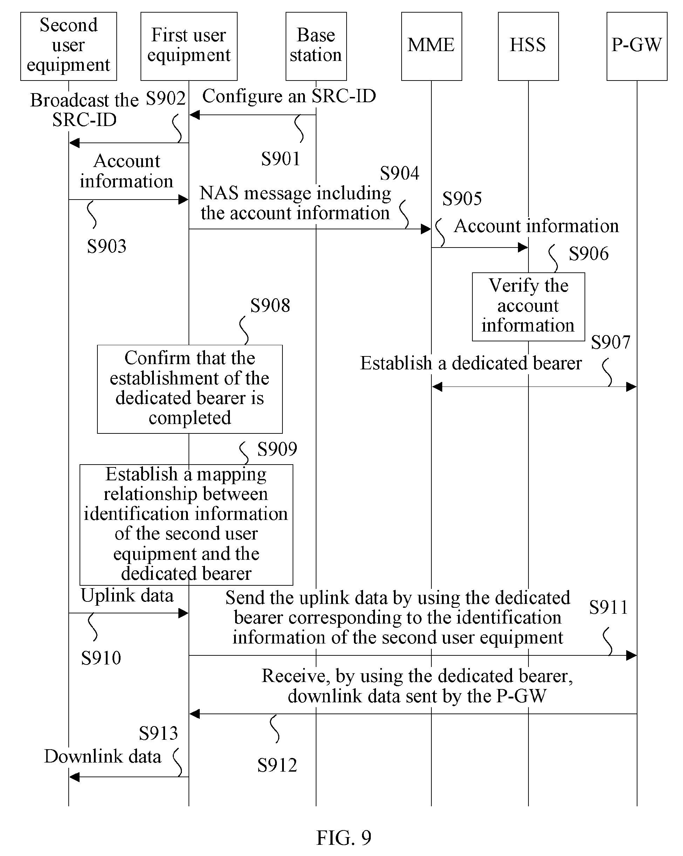

FIG. 9 is a flowchart of yet another embodiment of a network access method according to the present invention. As shown in FIG. 9, the network access method in this embodiment includes:
S901: Abase station configures an SRC-ID for first user equipment.
S902: The first user equipment broadcasts the SRC-ID in a Wi-Fi network, so that after receiving the SRC-ID, second user equipment accesses the first user equipment in the Wi-Fi network according to the SRC-ID.

It may be understood that, after receiving the SRC-ID, the second user equipment sends, at a Wi-Fi layer, a connection request to the first user equipment, so that the first user equipment allocates an internal IP address for the second user equipment, and sends the internal IP address allocated for the second user equipment to the second user equipment.

S903: The second user equipment sends account information to the first user equipment through the Wi-Fi network.

The account information of the second user equipment may be account information purchased by a user from an operator to access a cellular network in a place covered by a Wi-Fi hot spot, and may include authentication information for the second user equipment to access the cellular network and a basis of charging the second user equipment after access to the cellular network, for example, may be information such as a username or a password.

S904: The first user equipment sends a NAS message including the account information to an MME.

S905: The MME sends the account information to an HSS.

S906: The HSS verifies the second user equipment according to the account information.

In this embodiment, the verification may include determining that the account is a legal account in the operator and an account amount meets a requirement.

S907: If the MME determines that the verification succeeds, the MME establishes, between the first user equipment and a P-GW, a dedicated bearer serving the second user equipment.

S908: The first user equipment confirms that the establishment of the dedicated bearer is completed.

S909: The first user equipment establishes a mapping relationship between identification information of the second user equipment and the dedicated bearer.

In this embodiment, the identification information of the second user equipment may be the internal IP address allocated by the first user equipment for the second user equipment that makes access.

In the process of establishing, between the first user equipment and the gateway according to the account information, the dedicated bearer serving the second user equipment, the MME sends, to the first user equipment, a parameter of the established dedicated bearer, and identification information of the second user equipment and the like carried in a NAS message, so that the first user equipment determines that the established bearer is the dedicated bearer established for the second user equipment corresponding to the received identification information of the second user equipment. Because multiple second user equipments may access the first user equipment, the first user equipment needs to establish a mapping relationship between identification information of the multiple second user equipments and multiple dedicated bearers, where the identification information of the second user equipment is used for distinguishing the second user equipment that accesses the first user equipment through the Wi-Fi network, so that during data transmission, the first user equipment can determine a corresponding dedicated bearer from the mapping relationship according to the identification information of the second user equipment. In this embodiment, the identification information of the second user equipment may be an internal IP address allocated by the first user equipment for the second user equipment that accesses the first user equipment. It may be understood that, the identification information of the second user equipment in this embodiment may also be information that can be used for distinguishing the second user equipment, such as a device ID or sequence number.

S910: After the dedicated bearer is established, the second user equipment sends uplink data to the first user equipment.

S911: The first user equipment sends the uplink data to the P-GW according to the mapping relationship between the identification information of the second user equipment and the dedicated bearer and by using the dedicated bearer corresponding to the identification information of the second user equipment.

S912: The first user equipment receives, by using the dedicated bearer, downlink data sent by the P-GW.

S913: The first user equipment sends, through the Wi-Fi network according to the mapping relationship between the identification information of the second user equipment and the dedicated bearer, the downlink data to the second user equipment corresponding to the identification information of the second user equipment.

According to the network access method provided in this embodiment, first user equipment first receives, through a Wi-Fi network, account information sent by second user equipment, and then sends the account information to an MME, so that the MME establishes, between the first user equipment and a gateway according to the account information, a dedicated bearer serving the second user equipment, and after confirming that the establishment of the dedicated bearer is completed, the first user equipment establishes a mapping relationship between identification information of the second user equipment and the dedicated bearer. For data transmission after access, if the first user equipment receives, by using the dedicated bearer, downlink data sent by the gateway, the first user equipment sends, through the Wi-Fi network according to the mapping relationship between the identification information of the second user equipment and the dedicated bearer, the downlink data to the second user equipment corresponding to the identification information of the second user equipment; and if the first user equipment receives, through the Wi-Fi network, uplink data sent by the second user equipment, the first user equipment sends the uplink data to the gateway according to the mapping relationship between the identification information of the second user equipment and the dedicated bearer and by using the dedicated bearer corresponding to the identification information of the second user equipment. In this way, data between the second user equipment and a cellular network is transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot.

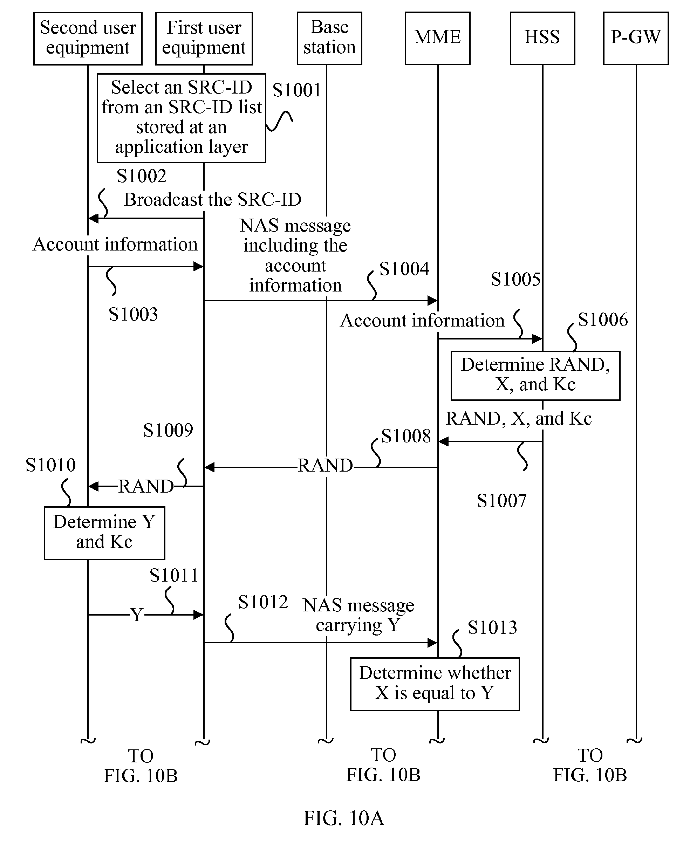

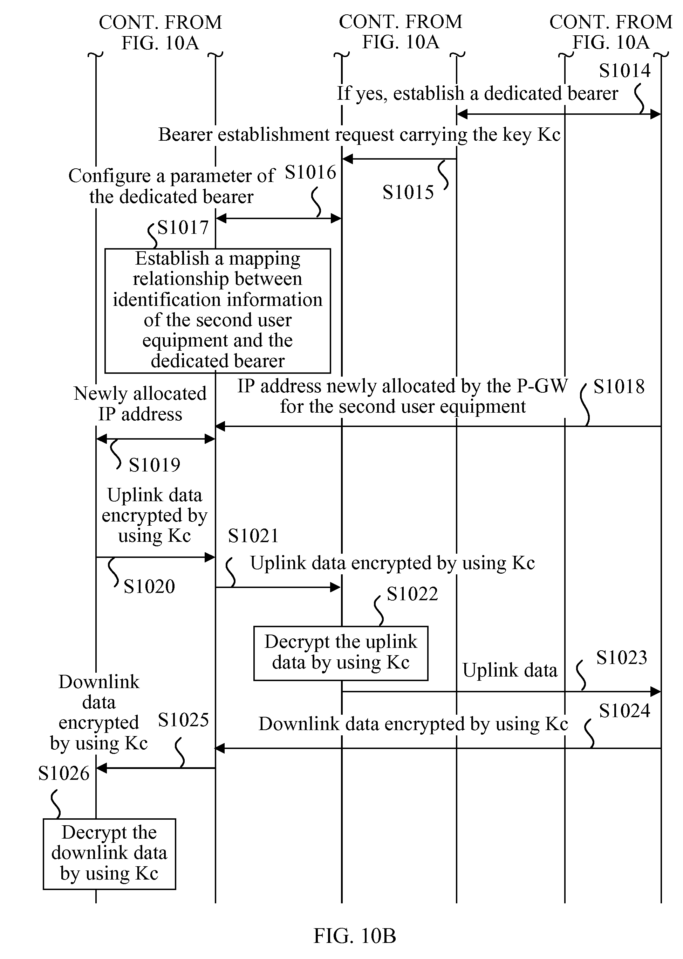

FIG. 10A and FIG. 10B are a flowchart of yet another embodiment of a network access method according to the present invention. As shown in FIG. 10A and FIG. 10B, in the network access method in this embodiment, a security problem of the account information of the second user equipment is further considered; and the method includes:
S1001: First user equipment selects an SRC-ID from an SRC-ID list stored at an application layer.
S1002: The first user equipment broadcasts the SRC-ID in a Wi-Fi network, so that after receiving the SRC-ID, second user equipment accesses the first user equipment in the Wi-Fi network according to the SRC-ID.

It may be understood that, after receiving the SRC-ID, the second user equipment sends, at a Wi-Fi layer, a connection request to the first user equipment, so that the first user equipment allocates an internal IP address for the second user equipment, and sends the internal IP address allocated for the second user equipment to the second user equipment.

S1003: The second user equipment sends account information to the first user equipment through the Wi-Fi network.

S1004: The first user equipment sends a NAS message including the account information to an MME.

S1005: The MME sends the account information to an HSS.

S1006: The HSS determines a random number RAND, a second check value X, and a key Kc according to the account information and a key that is determined in an authentication center.

S1007: The HSS sends the random number RAND, the second check value X, and the key Kc to the MME.

S1008: The MME sends the random number RAND to the first user equipment.

S1009: The first user equipment sends the random number RAND to the second user equipment.

S1010: The second user equipment determines a first check value Y and the key Kc according to the random number RAND and the account information.

The second user equipment may generate the first check value Y and the key Kc according to the random number RAND. Because the account information (for example, a username) and a password need to be used in the generation process, but the first user equipment can acquire only the account information (for example, a username) and cannot acquire a password of the second user equipment, the first user equipment cannot generate the first check value and the key Kc or generates an erroneous check value and key Kc, and therefore cannot succeed in a security verification process, and further cannot establish a dedicated bearer. Therefore, addition of the security verification process can ensure that the first user equipment cannot establish a bearer for the first user equipment even through the first user equipment acquires the account information of the second user equipment.

S1011: The second user equipment sends the first check value Y to the first user equipment.

S1012: The first user equipment sends the first check value Y to the MME by using a NAS message.

S1013: The MME determines whether the first check value Y is the same as the second check value X.

S1014: If yes, the MME establishes, between the first user equipment and a gateway, a dedicated bearer serving the second user equipment.

S1015: After the dedicated bearer is established, the MME sends a bearer establishment request to a base station, where the bearer establishment request carries the key Kc.

S1016: The base station configures a parameter of the dedicated bearer for the first user equipment.

S1017: The first user equipment establishes a mapping relationship between identification information of the second user equipment and the dedicated bearer according to the parameter of the dedicated bearer.

S1018: The P-GW sends, to the first user equipment, an IP address newly allocated by the P-GW for the second user equipment.

S1019: The first user equipment sends the IP address newly allocated by the P-GW for the second user equipment to the second user equipment.

S1020: The second user equipment sends uplink data encrypted by using the key Kc to the first user equipment.

All information transmitted on the dedicated bearer established for the second user equipment is encrypted by using encryption information (key Kc) of the second user equipment, thereby ensuring that because S-UE cannot decrypt the uplink data of the second user equipment, the S-UE cannot transmit data of the S-UE on the dedicated bearer.

S1021: The first user equipment sends the uplink data to the base station.

S1022: The base station decrypts the uplink data by using the key Kc acquired from the MME.

S 1023: The base station sends the decrypted uplink data to the P-GW.

S1024: The first user equipment receives, on the dedicated bearer, downlink data sent by the gateway to the second user equipment, where the downlink data is encrypted by using Kc.

S1025: The first user equipment sends the downlink data encrypted by using Kc to the second user equipment by means of Wi-Fi according to the mapping relationship between the identification information of the second user equipment and the dedicated bearer.

S1026: The second user equipment decrypts the received downlink data by using Kc.

In this embodiment, a manner of processing the downlink data is the same as that in the embodiment shown in FIG. 9, and is not described again.

According to the network access method provided in this embodiment, first user equipment first receives, through a Wi-Fi network, account information sent by second user equipment, and then sends the account information to an MME; only after a security verification process succeeds, the MME establishes, between the first user equipment and a gateway according to the account information, a dedicated bearer serving the second user equipment; the first user equipment receives, through the Wi-Fi network, uplink data sent by the second user equipment, where the uplink data carries an IP address allocated by the gateway for the second user equipment, and the uplink data is encrypted by using a key generated according to a random number; and the first user equipment sends the uplink data to the gateway according to a mapping relationship between identification information of the second user equipment and the dedicated bearer and by using the dedicated bearer corresponding to the identification information of the second user equipment. In this way, data between the second user equipment and a cellular network is transmitted on the dedicated bearer, and an incurred fee is paid by the second user equipment, improving the possibility that user equipment that has a Wi-Fi function but does not have a cellular network communication function accesses the cellular network in a place covered by a Wi-Fi hot spot, and further avoiding a problem: the first user equipment thieves the account information of the second user equipment and sends data of the first user equipment by using the dedicated bearer of the second user equipment so that a fee is paid by the second user equipment.

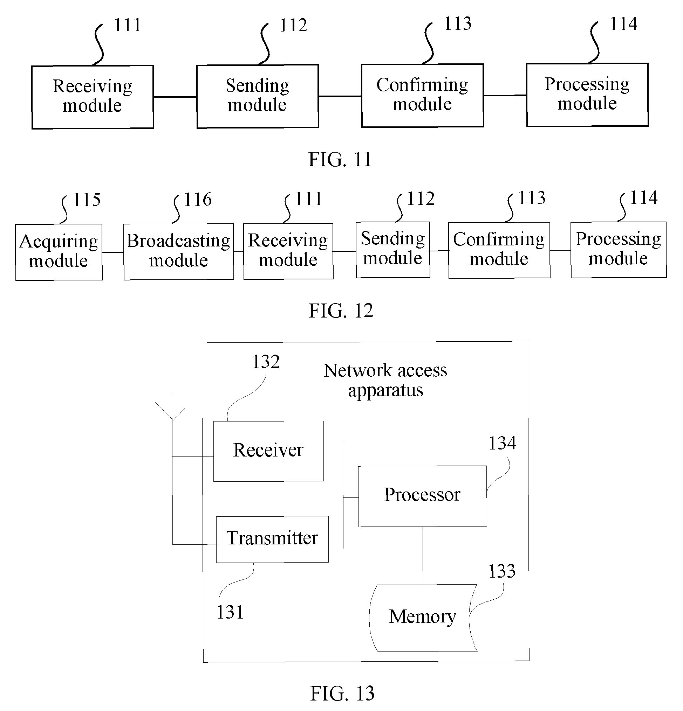

FIG. 11 is a schematic structural diagram of an embodiment of a network access apparatus according to the present invention. As shown in FIG. 11, the network access apparatus in this embodiment is first user equipment, and includes: a receiving module 111, a sending module 112, a confirming module 113, and a processing module 114, where the receiving module 111 is configured to receive, through a Wi-Fi network, account information sent by second user equipment; the sending module 112 is configured to send the account information received by the receiving module 111 to an MME, so that the MME establishes, between the first user equipment and a gateway according to the account information, a dedicated bearer serving the second user equipment; the confirming module 113 is configured to: after the sending module sends the account information, determine that the establishment of the dedicated bearer is completed; and the processing module 114 is configured to: after the confirming module determines that the establishment of the dedicated bearer is completed, establish a mapping relationship between identification information of the second user equipment and the dedicated bearer, where the identification information of the second user equipment is used for distinguishing the second user equipment that accesses the first user equipment through the Wi-Fi network.

Optionally, the first user equipment is user equipment that has a Wi-Fi function and a cellular network communication function; and
the second user equipment is user equipment that has a Wi-Fi function but does not have a cellular network communication function, where there are one or more second user equipments.

The apparatus in this embodiment can be configured to execute the technical solution of the method embodiment shown in FIG. 1. Implementation principles and technical effects thereof are similar, and details are not described herein again.

Further, the receiving module 111 is further configured to receive, by using the dedicated bearer, downlink data sent by the gateway; and
the sending module 112 is further configured to send, through the Wi-Fi network according to the mapping relationship between the identification information of the second user equipment and the dedicated bearer, the downlink data to the second user equipment corresponding to the identification information of the second user equipment.

Further, the receiving module 111 is further configured to receive, through the Wi-Fi network, uplink data sent by the second user equipment, where the uplink data carries the identification information of the second user equipment; and
the sending module 112 is further configured to send the uplink data received by the receiving module to the gateway according to the mapping relationship, established by the processing module, between the identification information of the second user equipment and the dedicated bearer and by using the dedicated bearer corresponding to the identification information of the second user equipment received by the receiving module.

Further, the sending module 112 is further configured to:
when the dedicated bearer is a bearer established on a newly established public data network PDN connection, before sending the uplink data to the gateway by using the dedicated bearer corresponding to the identification information of the second user equipment, confirm that the uplink data carries an Internet Protocol IP address allocated by the gateway for the second user equipment; and
the sending module 112 is further configured to:
   when the dedicated bearer is a bearer established on an existing PDN connection between the first user equipment and the gateway, before sending the uplink data to the gateway by using the dedicated bearer corresponding to the identification information of the second user equipment, confirm that the uplink data carries an IP address of the first user equipment.

FIG. 12 is a schematic structural diagram of another embodiment of a network access apparatus according to the present invention. As shown in FIG. 12, based on the embodiment shown in FIG. 11, the network access apparatus in this embodiment further includes an acquiring module 115 and a broadcasting module 116, where the acquiring module 115 is configured to: before the account information sent by the second user equipment is received through the wireless fidelity Wi-Fi network, acquire a short range communication-identity SRC-ID configured by a base station for the first user equipment; and
the broadcasting module 116 is configured to broadcast, in the Wi-Fi network, the SRC-ID acquired by the acquiring module, so that the second user equipment accesses the first user equipment; or
the acquiring module 115 is configured to request to acquire an SRC-ID from an application layer server; and
the broadcasting module 116 is configured to broadcast, in the Wi-Fi network, the SRC-ID acquired by the acquiring module, so that the second user equipment accesses the first user equipment; or
the acquiring module 115 is configured to select an SRC-ID from an SRC-ID list stored at an application layer; and
the broadcasting module 116 is configured to broadcast, in the Wi-Fi network, the SRC-ID acquired by the acquiring module, so that the second user equipment accesses the first user equipment.

The receiving module 111 is further configured to: after the account information is sent to the mobility management entity MME, and before the first user equipment confirms that the establishment of the dedicated bearer is completed, receive a random number generated in a process of verifying the account information and sent by the MME;
the sending module 112 is further configured to send the random number received by the receiving module to the second user equipment;
the receiving module 111 is further configured to receive a first check value that is generated according to the random number sent by the sending module and that is sent by the second user equipment; and
the sending module 112 is further configured to send the first check value received by the receiving module to the MME.

Further, the receiving module 111 is further configured to receive, through the Wi-Fi network, the uplink data sent by the second user equipment, where the uplink data is encrypted by using a key generated according to the random number, and the uplink data carries the identification information of the second user equipment; and
the sending module 112 is further configured to send the uplink data encrypted by using the key to the gateway according to the mapping relationship, established by the processing module, between the identification information of the second user equipment and the dedicated bearer and by using the dedicated bearer corresponding to the identification information of the second user equipment.

Further, the receiving module 111 is further configured to receive, on the dedicated bearer, the downlink data sent by the gateway to the second user equipment, where the downlink data is encrypted by using a key generated according to the random number; and
the sending module 112 is further configured to send the downlink data encrypted by using the key to the second user equipment by means of Wi-Fi according to the mapping relationship, established by the processing module, between the identification information of the second user equipment and the dedicated bearer. The apparatus in this embodiment can be configured to execute the technical solution of the method embodiment shown in FIG. 3. Implementation principles and technical effects thereof are similar, and details are not described herein again.

FIG. 13 is a schematic structural diagram of still another embodiment of a network access apparatus according to the present invention. As shown in FIG. 13, the network access apparatus in this embodiment may be first user equipment, and includes a transmitter 131, a receiver 132, a memory 133, and a processor 134 separately connected to the transmitter 131, the receiver 132, and the memory 133. Certainly, the network access apparatus may further include general components such as an antenna, a baseband processing component, an intermediate radio frequency processing component, and an input and output apparatus, which is not limited herein in this embodiment of the present invention. The memory 133 stores a set of program code. The receiver 132 is configured to receive, through a wireless fidelity Wi-Fi network, account information sent by second user equipment;
the transmitter 131 is configured to send the account information received by the receiver to a mobility management entity MME, so that the MME establishes, between the first user equipment and a gateway according to the account information, a dedicated bearer serving the second user equipment; and
the processor 134 is configured to: after the transmitter sends the account information, determine that the establishment of the dedicated bearer is completed, and establish a mapping relationship between identification information of the second user equipment and the dedicated bearer, where the identification information of the second user equipment is used for distinguishing the second user equipment that accesses the first user equipment through the Wi-Fi network.

Further, the receiver 132 is further configured to receive, by using the dedicated bearer, downlink data sent by the gateway; and
the transmitter 131 is further configured to send, through the Wi-Fi network according to the mapping relationship between the identification information of the second user equipment and the dedicated bearer, the downlink data to the second user equipment corresponding to the identification information of the second user equipment.

Further, the receiver 132 is further configured to receive, through the Wi-Fi network, uplink data sent by the second user equipment, where the uplink data carries the identification information of the second user equipment; and
the transmitter 131 is further configured to send the uplink data received by the receiver to the gateway according to the mapping relationship, established by the processor, between the identification information of the second user equipment and the dedicated bearer and by using the dedicated bearer corresponding to the identification information of the second user equipment received by the receiver.

Further, the transmitter 131 is further configured to:
when the dedicated bearer is a bearer established on a newly established public data network PDN connection, before sending the uplink data to the gateway by using the dedicated bearer corresponding to the identification information of the second user equipment, confirm that the uplink data carries an Internet Protocol IP address allocated by the gateway for the second user equipment.

Further, the transmitter 131 is further configured to:
when the dedicated bearer is a bearer established on an existing PDN connection between the first user equipment and the gateway, before sending the uplink data to the gateway by using the dedicated bearer corresponding to the identification information of the second user equipment, confirm that the uplink data carries an IP address of the first user equipment.

Further, the receiver 132 is further configured to: after the account information is sent to the mobility management entity MME, and before the first user equipment confirms that the establishment of the dedicated bearer is completed, receive a random number generated in a process of verifying the account information and sent by the MME;
the transmitter 131 is further configured to send the random number received by the receiver to the second user equipment;
the receiver 132 is further configured to receive a first check value that is generated according to the random number sent by the transmitter and that is sent by the second user equipment; and
the transmitter 131 is further configured to send the first check value received by the receiver to the MME.

Further, the receiver 132 is further configured to receive, through the Wi-Fi network, the uplink data sent by the second user equipment, where the uplink data is encrypted by using a key generated according to the random number, and the uplink data carries the identification information of the second user equipment; and
the transmitter 131 is further configured to send the uplink data encrypted by using the key to the gateway according to the mapping relationship, established by the processor, between the identification information of the second user equipment and the dedicated bearer and by using the dedicated bearer corresponding to the identification information of the second user equipment.

Further, the receiver 132 is further configured to receive, on the dedicated bearer, the downlink data sent by the gateway to the second user equipment, where the downlink data is encrypted by using a key generated according to the random number; and
the transmitter 131 is further configured to send the downlink data encrypted by using the key to the second user equipment by means of Wi-Fi according to the mapping relationship, established by the processor, between the identification information of the second user equipment and the dedicated bearer.

Further, the processor 134 is further configured to: before the account information sent by the second user equipment is received through the wireless fidelity Wi-Fi network, acquire a short range communication-identity SRC-ID configured by a base station for the first user equipment, and broadcast the SRC-ID in the Wi-Fi network, so that the second user equipment accesses the first user equipment; or
the processor 134 is further configured to request to acquire an SRC-ID from an application layer server, and broadcast the SRC-ID in the Wi-Fi network, so that the second user equipment accesses the first user equipment; or
the processor 134 is further configured to select an SRC-ID from an SRC-ID list stored at an application layer, and broadcast the SRC-ID in the Wi-Fi network, so that the second user equipment accesses the first user equipment.

Further, the first user equipment is user equipment that has a Wi-Fi function and a cellular network communication function; and
the second user equipment is user equipment that has a Wi-Fi function but does not have a cellular network communication function, where there are one or more second user equipments.

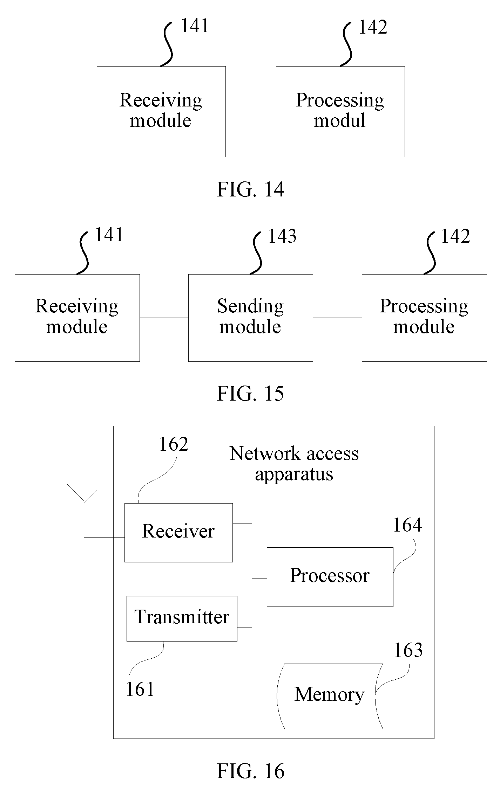

FIG. 14 is a schematic structural diagram of yet another embodiment of a network access apparatus according to the present invention. As shown in FIG. 14, the network access apparatus in this embodiment may be a mobility management entity, and includes a receiving module 141 and a processing module 142, where the receiving module 141 is configured to receive account information of second user equipment sent by first user equipment, where the account information is sent by the second user equipment to the first user equipment through a Wi-Fi network; and the processing module 142 is configured to establish, between the first user equipment and a gateway according to the account information received by the receiving module 141, a dedicated bearer serving the second user equipment.

Optionally, the first user equipment is user equipment that has a Wi-Fi function and a cellular network communication function; and
the second user equipment is user equipment that has a Wi-Fi function but does not have a cellular network communication function, where there are one or more second user equipments.

The apparatus in this embodiment can be configured to execute the technical solution of the method embodiment shown in FIG. 4. Implementation principles and technical effects thereof are similar, and details are not described herein again.

FIG. 15 is a schematic structural diagram of yet another embodiment of a network access apparatus according to the present invention. As shown in FIG. 15, based on the embodiment shown in FIG. 14, the network access apparatus in this embodiment further includes a sending module 143, where the sending module 143 is configured to: after the receiving module 141 receives the account information of the second user equipment sent by the first user equipment, send the account information to an HSS, so that the HSS verifies the second user equipment according to the account information; and
the processing module 142 is further configured to: if determining that the verification succeeds, establish, between the first user equipment and the gateway, the dedicated bearer serving the second user equipment, so that after confirming that the establishment of the dedicated bearer is completed, the first user equipment establishes a mapping relationship between identification information of the second user equipment and the dedicated bearer.

Further, the receiving module 141 is further configured to: after the sending module 143 sends the account information to the home subscriber server HSS, receive a random number generated in a process of verifying the account information by the HSS and a second check value generated by the HSS;
the sending module 143 is further configured to send the random number received by the receiving module to the first user equipment, so that the first user equipment sends the random number to the second user equipment, and receives a first check value generated according to the random number and sent by the second user equipment;
the receiving module 141 is further configured to receive the first check value generated by the second user equipment according to the random number and sent by the first user equipment; and
the processing module 142 is further configured to determine whether the second check value received by the receiving module is the same as the first check value received by the receiving module, and if yes, determine, by the MME, that the verification succeeds.

The apparatus in this embodiment can be configured to execute the technical solution of the method embodiment shown in FIG. 5. Implementation principles and technical effects thereof are similar, and details are not described herein again.

FIG. 16 is a schematic structural diagram of yet another embodiment of a network access apparatus according to the present invention. As shown in FIG. 16, the network access apparatus in this embodiment may be a mobility management entity, and includes a transmitter 161, a receiver 162, a memory 163, and a processor 164 separately connected to the transmitter 161, the receiver 162, and the memory 163. Certainly, the network access apparatus may further include general components such as an antenna, a baseband processing component, an intermediate radio frequency processing component, and an input and output apparatus, which is not limited herein in this embodiment of the present invention. The memory 163 stores a set of program code.

The receiver 162 is configured to receive account information of second user equipment sent by first user equipment, where the account information is sent by the second user equipment to the first user equipment through a wireless fidelity Wi-Fi network; and
the processor 164 is configured to establish, between the first user equipment and a gateway according to the account information received by the receiver, a dedicated bearer serving the second user equipment.

Further, the transmitter 161 is configured to: after the receiver receives the account information of the second user equipment sent by the first user equipment, send the account information to a home subscriber server HSS, so that the HSS verifies the second user equipment according to the account information, and
the processor 164 is further configured to: if determining that the verification succeeds, establish, between the first user equipment and the gateway, the dedicated bearer serving the second user equipment, so that after confirming that the establishment of the dedicated bearer is completed, the first user equipment establishes a mapping relationship between identification information of the second user equipment and the dedicated bearer.

Further, the receiver 162 is further configured to: after the transmitter sends the account information to the home subscriber server HSS, receive a random number generated in a process of verifying the account information by the HSS and a second check value generated by the HSS;
the transmitter 161 is further configured to send the random number received by the receiver to the first user equipment, so that the first user equipment sends the random number to the second user equipment, and receives a first check value generated according to the random number and sent by the second user equipment;
the receiver 162 is further configured to receive the first check value generated by the second user equipment according to the random number and sent by the first user equipment; and
the processor 164 is further configured to determine whether the second check value received by the receiver is the same as the first check value received by the receiver, and if yes, determine, by the MME, that the verification succeeds.

Further, the first user equipment is user equipment that has a Wi-Fi function and a cellular network communication function; and
the second user equipment is user equipment that has a Wi-Fi function but does not have a cellular network communication function, where there are one or more second user equipments.

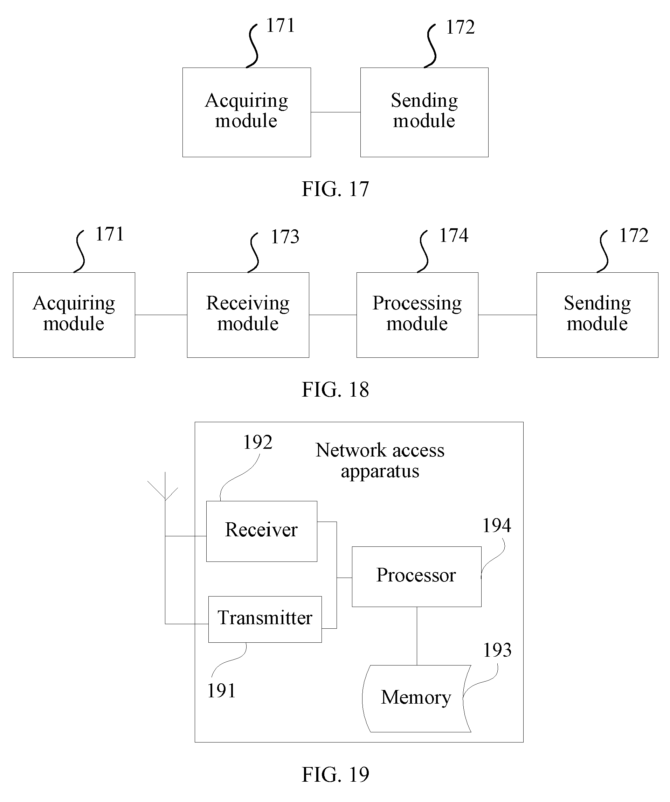

FIG. 17 is a schematic structural diagram of yet another embodiment of a network access apparatus according to the present invention. As shown in FIG. 17, the network access apparatus in this embodiment may be second user equipment, and includes an acquiring module 171 and a sending module 172, where the acquiring module 171 is configured to acquire account information; and the sending module 172 is configured to send the account information to first user equipment through a Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network.

The apparatus in this embodiment can be configured to execute the technical solution of the method embodiment shown in FIG. 6. Implementation principles and technical effects thereof are similar, and details are not described herein again.

FIG. 18 is a schematic structural diagram of yet another embodiment of a network access apparatus according to the present invention. As shown in FIG. 18, based on the embodiment shown in FIG. 17, the network access apparatus in this embodiment further includes a receiving module 173 and a processing module 174, where the receiving module 173 is configured to: before the sending module 172 sends the account information to the first user equipment through the Wi-Fi network, receive an SRC-ID that is broadcast by the first user equipment in the Wi-Fi network; and the processing module 174 is configured to access the first user equipment in the Wi-Fi network according to the SRC-ID received by the receiving module 173.

Further, the sending module 172 is further configured to send uplink data to the first user equipment through the Wi-Fi network, where the uplink data carries the identification information of the second user equipment, and the identification information of the second user equipment is used for distinguishing the second user equipment that accesses the first user equipment through the Wi-Fi network.

The receiving module 173 is further configured to receive a random number generated in a process of verifying the account information and sent by the first user equipment;
the processing module 174 is further configured to generate a first check value according to the random number received by the receiving module 173; and
the sending module 172 is further configured to send the first check value generated by the processing module 174 to the first user equipment.

The processing module 174 is further configured to: after the account information is sent to the first user equipment through the Wi-Fi network, generate a key according to the random number; and
the sending module 172 is further configured to send uplink data to the first user equipment through the Wi-Fi network, where the uplink data is encrypted by using the key, and the uplink data carries the identification information of the second user equipment.

Further, the first user equipment is user equipment that has a Wi-Fi function and a cellular network communication function; and
the second user equipment is user equipment that has a Wi-Fi function but does not have a cellular network communication function, where there are one or more second user equipments.

The apparatus in this embodiment can be configured to execute the technical solution of the method embodiment shown in FIG. 7 or FIG. 8. Implementation principles and technical effects thereof are similar, and details are not described herein again.

FIG. 19 is a schematic structural diagram of yet another embodiment of a network access apparatus according to the present invention. As shown in FIG. 19, the network access apparatus in this embodiment may be second user equipment, and includes a transmitter 191, a receiver 192, a memory 193, and a processor 194 separately connected to the transmitter 191, the receiver 192, and the memory 193. Certainly, the network access apparatus may further include general components such as an antenna, a baseband processing component, an intermediate radio frequency processing component, and an input and output apparatus, which is not limited herein in this embodiment of the present invention. The memory 193 stores a set of program code.

The processor 194 is configured to acquire account information; and
the transmitter 191 is configured to send the account information to first user equipment through a wireless fidelity Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, where the identification information of the second user equipment is used for distinguishing the second user equipment that accesses the first user equipment through the Wi-Fi network.

Further, the receiver 192 is configured to: before the transmitter sends the account information to the first user equipment through the wireless fidelity Wi-Fi network, receive a short range communication-identity SRC-ID that is broadcast by the first user equipment in the Wi-Fi network, and
the processor 194 is configured to access the first user equipment in the Wi-Fi network according to the SRC-ID received by the receiver.

Further, the transmitter 191 is further configured to send uplink data to the first user equipment through the Wi-Fi network, where the uplink data carries the identification information of the second user equipment, and the identification information of the second user equipment is used for distinguishing the second user equipment that accesses the first user equipment through the Wi-Fi network.

Further, the receiver 192 is further configured to receive a random number generated in a process of verifying the account information and sent by the first user equipment;
the processor 194 is further configured to generate a first check value according to the random number received by the receiver; and
the transmitter 194 is further configured to send the first check value generated by the processor to the first user equipment.

Further, the processor 194 is further configured to: after the account information is sent to the first user equipment through the wireless fidelity Wi-Fi network, generate a key according to the random number; and
the transmitter 191 is further configured to send the uplink data to the first user equipment through the Wi-Fi network, where the uplink data is encrypted by using the key, and the uplink data carries the identification information of the second user equipment.

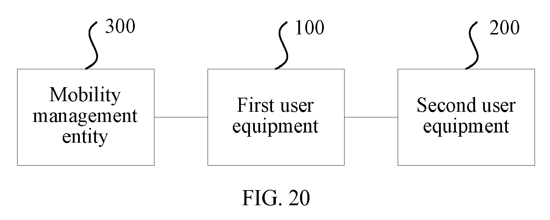

Further, the first user equipment is user equipment that has a Wi-Fi function and a cellular network communication function; and
the second user equipment is user equipment that has a Wi-Fi function but does not have a cellular network communication function, where there are one or more second user equipments. FIG. 20 is a schematic structural diagram of an embodiment of a network system according to the present invention. As shown in FIG. 20, the network system in this embodiment may include a first user equipment 100 in the embodiments shown in FIG. 11 to FIG. 13, a mobility management entity 200 in the embodiments shown in FIG. 14 to FIG. 16, and a second user equipment 300 in the embodiments shown in FIG. 17 to FIG. 19.

It may be understood that, the system provided in the present invention may further include network elements such as a base station, an HSS, and a P-GW.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored at a computer-readable storage medium. The software functional unit is stored at a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A network access method, comprising:
receiving, by first user equipment through a wireless fidelity Wi-Fi network, account information sent by second user equipment;
sending, by the first user equipment, the account information to a mobility management entity MME, so that the MME establishes, between the first user equipment and a gateway according to the account information, a dedicated bearer serving the second user equipment; and
establishing, by the first user equipment, a mapping relationship between identification information of the second user equipment and the dedicated bearer after confirming that the establishment of the dedicated bearer is completed.

2. The method according to claim 1, wherein the method further comprises:
receiving, by the first user equipment by using the dedicated bearer, downlink data sent by the gateway; and
sending, by the first user equipment through the Wi-Fi network according to the mapping relationship between the identification information of the second user equipment and the dedicated bearer, the downlink data to the second user equipment corresponding to the identification information of the second user equipment.

3. The method according to claim 1 or 2, wherein the method further comprises:
receiving, by the first user equipment through the Wi-Fi network, uplink data sent by the second user equipment, wherein the uplink data carries the identification information of the second user equipment; and
sending, by the first user equipment, the uplink data to the gateway according to the mapping relationship between the identification information of the second user equipment and the dedicated bearer and by using the dedicated bearer corresponding to the identification information of the second user equipment.

4. The method according to claim 3, wherein if the dedicated bearer is a bearer established on a newly established public data network PDN connection, before the sending the uplink data to the gateway by using the dedicated bearer corresponding to the identification information of the second user equipment, the method further comprises:
confirming, by the first user equipment, that the uplink data carries an Internet Protocol IP address allocated by the gateway for the second user equipment.

5. The method according to claim 3, wherein if the dedicated bearer is a bearer established on an existing PDN connection between the first user equipment and the gateway, before the sending the uplink data to the gateway by using the dedicated bearer corresponding to the identification information of the second user equipment, the method further comprises:
confirming, by the first user equipment, that the uplink data carries an IP address of the first user equipment.

6. The method according to any one of claims 2 to 5, wherein after the sending, by the first user equipment, the account information to a mobility management entity MME, and before the confirming, by the first user equipment, that the establishment of the dedicated bearer is completed, the method further comprises:
receiving, by the first user equipment, a random number generated in a process of verifying the account information and sent by the MME;
sending, by the first user equipment, the random number to the second user equipment;
receiving, by the first user equipment, a first check value generated according to the random number and sent by the second user equipment; and
sending, by the first user equipment, the first check value to the MME.

7. The method according to claim 6, wherein the receiving, by the first user equipment through the Wi-Fi network, uplink data sent by the second user equipment comprises:
receiving, by the first user equipment through the Wi-Fi network, the uplink data sent by the second user equipment, wherein the uplink data is encrypted by using a key generated according to the random number, and the uplink data carries the identification information of the second user equipment; and
the sending, by the first user equipment, the uplink data to the gateway according to the mapping relationship between the identification information of the second user equipment and the dedicated bearer and by using the dedicated bearer corresponding to the identification information of the second user equipment comprises:
sending, by the first user equipment, the uplink data encrypted by using the key to the gateway according to the mapping relationship between the identification information of the second user equipment and the dedicated bearer and by using the dedicated bearer corresponding to the identification information of the second user equipment.

8. The method according to claim 6, wherein the receiving, by the first user equipment by using the dedicated bearer, downlink data sent by the gateway comprises:
receiving, by the first user equipment on the dedicated bearer, the downlink data sent by the gateway to the second user equipment, wherein the downlink data is encrypted by using a key generated according to the random number; and
the sending, by the first user equipment through the Wi-Fi network according to the mapping relationship between the identification information of the second user equipment and the dedicated bearer, the downlink data to the second user equipment corresponding to the identification information of the second user equipment comprises:
sending, by the first user equipment, the downlink data encrypted by using the key to the second user equipment by means of Wi-Fi according to the mapping relationship between the identification information of the second user equipment and the dedicated bearer.

9. The method according to any one of claims 1 to 8, wherein before the receiving, by first user equipment through a wireless fidelity Wi-Fi network, account information sent by second user equipment, the method further comprises:
acquiring, by the first user equipment, a short range communication-identity SRC-ID configured by a base station for the first user equipment, and broadcasting the SRC-ID in the Wi-Fi network, so that the second user equipment accesses the first user equipment; or
requesting, by the first user equipment, to acquire the SRC-ID from an application layer server, and broadcasting the SRC-ID in the Wi-Fi network, so that the second user equipment accesses the first user equipment; or
selecting, by the first user equipment, the SRC-ID from an SRC-ID list stored at an application layer, and broadcasting the SRC-ID in the Wi-Fi network, so that the second user equipment accesses the first user equipment.

10. The method according to any one of claims 1 to 9, wherein the first user equipment is user equipment that has a Wi-Fi function and a cellular network communication function; and
the second user equipment is user equipment that has a Wi-Fi function but does not have a cellular network communication function, wherein there are one or more second user equipments.

11. A network access method, comprising:
receiving, by a mobility management entity MME, account information of second user equipment sent by first user equipment, wherein the account information is sent by the second user equipment to the first user equipment through a wireless fidelity Wi-Fi network; and
establishing, by the MME between the first user equipment and a gateway according to the account information, a dedicated bearer serving the second user equipment, so that after confirming that the establishment of the dedicated bearer is completed, the first user equipment establishes a mapping relationship between identification information of the second user equipment and the dedicated bearer.

12. The method according to claim 11, wherein after the receiving, by a mobility management entity MME, account information of second user equipment sent by first user equipment, the method further comprises:
sending, by the MME, the account information to a home subscriber server HSS, so that the HSS verifies the second user equipment according to the account information; and
if the MME determines that the verification succeeds, establishing, by the MME between the first user equipment and the gateway, the dedicated bearer serving the second user equipment.

13. The method according to claim 12, wherein after the sending, by the MME, the account information to a home subscriber server HSS, the method further comprises:
receiving, by the MME, a random number generated in a process of verifying the account information by the HSS and a second check value generated by the HSS;
sending, by the MME, the random number to the first user equipment, so that the first user equipment sends the random number to the second user equipment, and receives a first check value generated according to the random number and sent by the second user equipment;
receiving, by the MME, the first check value generated by the second user equipment according to the random number and sent by the first user equipment; and
determining, by the MME, whether the second check value is the same as the first check value, and if yes, determining, by the MME, that the verification succeeds.

14. The method according to any one of claims 11 to 13, wherein the first user equipment is user equipment that has a Wi-Fi function and a cellular network communication function; and
the second user equipment is user equipment that has a Wi-Fi function but does not have a cellular network communication function, wherein there are one or more second user equipments.

15. A network access method, comprising:
acquiring, by second user equipment, account information; and
sending, by the second user equipment, the account information to first user equipment through a wireless fidelity Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, wherein the identification information of the second user equipment is used for distinguishing the second user equipment that accesses the first user equipment through the Wi-Fi network.

16. The method according to claim 15, wherein before the sending, by the second user equipment, the account information to first user equipment through a wireless fidelity Wi-Fi network, the method further comprises:
receiving, by the second user equipment, a short range communication-identity SRC-ID that is broadcast by the first user equipment in the Wi-Fi network; and
accessing, by the second user equipment, the first user equipment in the Wi-Fi network according to the SRC-ID.

17. The method according to claim 15 or 16, wherein the method further comprises:
sending, by the second user equipment, uplink data to the first user equipment through the Wi-Fi network, wherein the uplink data carries the identification information of the second user equipment, and the identification information of the second user equipment is used for distinguishing the second user equipment that accesses the first user equipment through the Wi-Fi network.

18. The method according to claim 15 or 16, wherein the method further comprises:
receiving, by the second user equipment, a random number generated in a process of verifying the account information and sent by the first user equipment;
generating, by the second user equipment, a first check value according to the random number; and
sending, by the second user equipment, the first check value to the first user equipment.

19. The method according to claim 18, wherein after the sending, by the second user equipment, the account information to first user equipment through a wireless fidelity Wi-Fi network, the method further comprises:
generating, by the second user equipment, a key according to the random number; and
sending, by the second user equipment, uplink data to the first user equipment through the Wi-Fi network, wherein the uplink data is encrypted by using the key, and the uplink data carries the identification information of the second user equipment.

20. The method according to any one of claims 15 to 19, wherein the first user equipment is user equipment that has a Wi-Fi function and a cellular network communication function; and
the second user equipment is user equipment that has a Wi-Fi function but does not have a cellular network communication function, wherein there are one or more second user equipments.

21. A network access apparatus, comprising:
a receiving module, configured to receive, through a wireless fidelity Wi-Fi network, account information sent by second user equipment;
a sending module, configured to send the account information received by the receiving module to a mobility management entity MME, so that the MME establishes, between the first user equipment and a gateway according to the account information, a dedicated bearer serving the second user equipment;
a confirming module, configured to: after the sending module sends the account information, determine that the establishment of the dedicated bearer is completed; and
a processing module, configured to: after the confirming module determines that the establishment of the dedicated bearer is completed, establish a mapping relationship between identification information of the second user equipment and the dedicated bearer.

22. The apparatus according to claim 21, wherein the receiving module is further configured to receive, by using the dedicated bearer, downlink data sent by the gateway; and
the sending module is further configured to send, through the Wi-Fi network according to the mapping relationship between the identification information of the second user equipment and the dedicated bearer, the downlink data to the second user equipment corresponding to the identification information of the second user equipment.

23. The apparatus according to claim 21 or 22, wherein the receiving module is further configured to receive, through the Wi-Fi network, uplink data sent by the second user equipment, wherein the uplink data carries the identification information of the second user equipment; and
the sending module is further configured to send the uplink data received by the receiving module to the gateway according to the mapping relationship, established by the processing module, between the identification information of the second user equipment and the dedicated bearer and by using the dedicated bearer corresponding to the identification information of the second user equipment received by the receiving module.

24. The apparatus according to claim 23, wherein the sending module is further configured to:
when the dedicated bearer is a bearer established on a newly established public data network PDN connection, before sending the uplink data to the gateway by using the dedicated bearer corresponding to the identification information of the second user equipment, confirm that the uplink data carries an Internet Protocol IP address allocated by the gateway for the second user equipment.

25. The apparatus according to claim 23, wherein the sending module is further configured to:
when the dedicated bearer is a bearer established on an existing PDN connection between the first user equipment and the gateway, before sending the uplink data to the gateway by using the dedicated bearer corresponding to the identification information of the second user equipment, confirm that the uplink data carries an IP address of the first user equipment.

26. The apparatus according to any one of claims 22 to 25, wherein the receiving module is further configured to: after the account information is sent to the mobility management entity MME, and before the first user equipment confirms that the establishment of the dedicated bearer is completed, receive a random number generated in a process of verifying the account information and sent by the MME;
the sending module is further configured to send the random number received by the receiving module to the second user equipment;
the receiving module is further configured to receive a first check value that is generated according to the random number sent by the sending module and that is sent by the second user equipment; and
the sending module is further configured to send the first check value received by the receiving module to the MME.

27. The apparatus according to claim 26, wherein the receiving module is further configured to receive, through the Wi-Fi network, the uplink data sent by the second user equipment, wherein the uplink data is encrypted by using a key generated according to the random number, and the uplink data carries the identification information of the second user equipment; and
the sending module is further configured to send the uplink data encrypted by using the key to the gateway according to the mapping relationship, established by the processing module, between the identification information of the second user equipment and the dedicated bearer and by using the dedicated bearer corresponding to the identification information of the second user equipment.

28. The apparatus according to claim 26, wherein the receiving module is further configured to receive, on the dedicated bearer, the downlink data sent by the gateway to the second user equipment, wherein the downlink data is encrypted by using a key generated according to the random number; and
the sending module is further configured to send the downlink data encrypted by using the key to the second user equipment by means of Wi-Fi according to the mapping relationship, established by the processing module, between the identification information of the second user equipment and the dedicated bearer.

29. The apparatus according to any one of claims 21 to 28, further comprising:
an acquiring module, configured to: before the account information sent by the second user equipment is received through the wireless fidelity Wi-Fi network, acquire a short range communication-identity SRC-ID configured by a base station for the first user equipment; and
a broadcasting module, configured to broadcast, in the Wi-Fi network, the SRC-ID acquired by the acquiring module, so that the second user equipment accesses the first user equipment; or
the acquiring module is configured to request to acquire the SRC-ID from an application layer server; and
the broadcasting module is configured to broadcast, in the Wi-Fi network, the SRC-ID acquired by the acquiring module, so that the second user equipment accesses the first user equipment; or
the acquiring module is configured to select the SRC-ID from an SRC-ID list stored at an application layer; and
the broadcasting module is configured to broadcast, in the Wi-Fi network, the SRC-ID acquired by the acquiring module, so that the second user equipment accesses the first user equipment.

30. The apparatus according to any one of claims 21 to 29, wherein the first user equipment is user equipment that has a Wi-Fi function and a cellular network communication function; and
the second user equipment is user equipment that has a Wi-Fi function but does not have a cellular network communication function, wherein there are one or more second user equipments.

31. A network access apparatus, comprising:
a receiving module, configured to receive account information of second user equipment sent by first user equipment, wherein the account information is sent by the second user equipment to the first user equipment through a wireless fidelity Wi-Fi network; and
a processing module, configured to establish, between the first user equipment and a gateway according to the account information received by the receiving module, a dedicated bearer serving the second user equipment.

32. The apparatus according to claim 31, wherein the apparatus further comprises:
a sending module, configured to: after the receiving module receives the account information of the second user equipment sent by the first user equipment, send the account information to a home subscriber server HSS, so that the HSS verifies the second user equipment according to the account information, wherein
the processing module is further configured to: if determining that the verification succeeds, establish, between the first user equipment and the gateway, the dedicated bearer serving the second user equipment, so that after confirming that the establishment of the dedicated bearer is completed, the first user equipment establishes a mapping relationship between identification information of the second user equipment and the dedicated bearer.

33. The apparatus according to claim 32, wherein the receiving module is further configured to: after the sending module sends the account information to the home subscriber server HSS, receive a random number generated in a process of verifying the account information by the HSS and a second check value generated by the HSS;
the sending module is further configured to send the random number received by the receiving module to the first user equipment, so that the first user equipment sends the random number to the second user equipment, and receives a first check value generated according to the random number and sent by the second user equipment;
the receiving module is further configured to receive the first check value generated by the second user equipment according to the random number and sent by the first user equipment; and
the processing module is further configured to determine whether the second check value received by the receiving module is the same as the first check value received by the receiving module, and if yes, determine, by the MME, that the verification succeeds.

34. The apparatus according to any one of claims 31 to 33, wherein the first user equipment is user equipment that has a Wi-Fi function and a cellular network communication function; and
the second user equipment is user equipment that has a Wi-Fi function but does not have a cellular network communication function, wherein there are one or more second user equipments.

35. A network access apparatus, comprising:
an acquiring module, configured to acquire account information; and
a sending module, configured to send the account information to first user equipment through a wireless fidelity Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, wherein the identification information of the second user equipment is used for distinguishing the second user equipment that accesses the first user equipment through the Wi-Fi network.

36. The apparatus according to claim 35, further comprising:
a receiving module, configured to: before the sending module sends the account information to the first user equipment through the wireless fidelity Wi-Fi network, receive a short range communication-identity SRC-ID that is broadcast by the first user equipment in the Wi-Fi network; and
a processing module, configured to access the first user equipment in the Wi-Fi network according to the SRC-ID received by the receiving module.

37. The apparatus according to claim 35 or 36, wherein the sending module is further configured to send uplink data to the first user equipment through the Wi-Fi network, wherein the uplink data carries the identification information of the second user equipment, and the identification information of the second user equipment is used for distinguishing the second user equipment that accesses the first user equipment through the Wi-Fi network.

38. The apparatus according to claim 35 or 36, wherein the receiving module is further configured to receive a random number generated in a process of verifying the account information and sent by the first user equipment;
the processing module is further configured to generate a first check value according to the random number received by the receiving module; and
the sending module is further configured to send the first check value generated by the processing module to the first user equipment.

39. The apparatus according to claim 38, wherein the processing module is further configured to: after the account information is sent to the first user equipment through the wireless fidelity Wi-Fi network, generate a key according to the random number; and
the sending module is further configured to send uplink data to the first user equipment through the Wi-Fi network, wherein the uplink data is encrypted by using the key, and the uplink data carries the identification information of the second user equipment.

40. The apparatus according to any one of claims 35 to 39, wherein the first user equipment is user equipment that has a Wi-Fi function and a cellular network communication function; and
the second user equipment is user equipment that has a Wi-Fi function but does not have a cellular network communication function, wherein there are one or more second user equipments.

41. A network access apparatus, comprising:
a receiver, configured to receive, through a wireless fidelity Wi-Fi network, account information sent by second user equipment;
a transmitter, configured to send the account information received by the receiver to a mobility management entity MME, so that the MME establishes, between the first user equipment and a gateway according to the account information, a dedicated bearer serving the second user equipment; and
a processor, configured to: after the transmitter sends the account information, determine that the establishment of the dedicated bearer is completed, and establish a mapping relationship between identification information of the second user equipment and the dedicated bearer.

42. The apparatus according to claim 41, wherein the receiver is further configured to receive, by using the dedicated bearer, downlink data sent by the gateway; and
the transmitter is further configured to send, through the Wi-Fi network according to the mapping relationship between the identification information of the second user equipment and the dedicated bearer, the downlink data to the second user equipment corresponding to the identification information of the second user equipment.

43. The apparatus according to claim 41 or 42, wherein the receiver is further configured to receive, through the Wi-Fi network, uplink data sent by the second user equipment, wherein the uplink data carries the identification information of the second user equipment; and
the transmitter is further configured to send the uplink data received by the receiver to the gateway according to the mapping relationship, established by the processor, between the identification information of the second user equipment and the dedicated bearer and by using the dedicated bearer corresponding to the identification information of the second user equipment received by the receiver.

44. The apparatus according to claim 43, wherein the transmitter is further configured to:
when the dedicated bearer is a bearer established on a newly established public data network PDN connection, before sending the uplink data to the gateway by using the dedicated bearer corresponding to the identification information of the second user equipment, confirm that the uplink data carries an Internet Protocol IP address allocated by the gateway for the second user equipment.

45. The apparatus according to claim 43, wherein the transmitter is further configured to:
when the dedicated bearer is a bearer established on an existing PDN connection between the first user equipment and the gateway, before sending the uplink data to the gateway by using the dedicated bearer corresponding to the identification information of the second user equipment, confirm that the uplink data carries an IP address of the first user equipment.

46. The apparatus according to any one of claims 42 to 45, wherein the receiver is further configured to: after the account information is sent to the mobility management entity MME, and before the first user equipment confirms that the establishment of the dedicated bearer is completed, receive a random number generated in a process of verifying the account information and sent by the MME;
the transmitter is further configured to send the random number received by the receiver to the second user equipment;
the receiver is further configured to receive a first check value that is generated according to the random number sent by the transmitter and that is sent by the second user equipment; and
the transmitter is further configured to send the first check value received by the receiver to the MME.

47. The apparatus according to claim 46, wherein the receiver is further configured to receive, through the Wi-Fi network, the uplink data sent by the second user equipment, wherein the uplink data is encrypted by using a key generated according to the random number, and the uplink data carries the identification information of the second user equipment; and
the transmitter is further configured to send the uplink data encrypted by using the key to the gateway according to the mapping relationship, established by the processor, between the identification information of the second user equipment and the dedicated bearer and by using the dedicated bearer corresponding to the identification information of the second user equipment.

48. The apparatus according to claim 46, wherein the receiver is further configured to receive, on the dedicated bearer, the downlink data sent by the gateway to the second user equipment, wherein the downlink data is encrypted by using a key generated according to the random number; and
the transmitter is further configured to send the downlink data encrypted by using the key to the second user equipment by means of Wi-Fi according to the mapping relationship, established by the processor, between the identification information of the second user equipment and the dedicated bearer.

49. The apparatus according to any one of claims 41 to 48, wherein the processor is further configured to: before the account information sent by the second user equipment is received through the wireless fidelity Wi-Fi network, acquire a short range communication-identity SRC-ID configured by a base station for the first user equipment, and broadcast the SRC-ID in the Wi-Fi network, so that the second user equipment accesses the first user equipment; or
the processor is further configured to request to acquire the SRC-ID from an application layer server, and broadcast the SRC-ID in the Wi-Fi network, so that the second user equipment accesses the first user equipment; or
the processor is further configured to select the SRC-ID from an SRC-ID list stored at an application layer, and broadcast the SRC-ID in the Wi-Fi network, so that the second user equipment accesses the first user equipment.

50. The apparatus according to any one of claims 41 to 49, wherein the first user equipment is user equipment that has a Wi-Fi function and a cellular network communication function; and
the second user equipment is user equipment that has a Wi-Fi function but does not have a cellular network communication function, wherein there are one or more second user equipments.

51. A network access apparatus, comprising:
a receiver, configured to receive account information of second user equipment sent by first user equipment, wherein the account information is sent by the second user equipment to the first user equipment through a wireless fidelity Wi-Fi network; and
a processor, configured to establish, between the first user equipment and a gateway according to the account information received by the receiver, a dedicated bearer serving the second user equipment.

52. The apparatus according to claim 51, wherein the apparatus further comprises:
a transmitter, configured to: after the receiver receives the account information of the second user equipment sent by the first user equipment, send the account information to a home subscriber server HSS, so that the HSS verifies the second user equipment according to the account information, wherein
the processor is further configured to: if determining that the verification succeeds, establish, between the first user equipment and the gateway, the dedicated bearer serving the second user equipment, so that after confirming that the establishment of the dedicated bearer is completed, the first user equipment establishes a mapping relationship between identification information of the second user equipment and the dedicated bearer.

53. The apparatus according to claim 52, wherein the receiver is further configured to: after the transmitter sends the account information to the home subscriber server HSS, receive a random number generated in a process of verifying the account information by the HSS and a second check value generated by the HSS;
the transmitter is further configured to send the random number received by the receiver to the first user equipment, so that the first user equipment sends the random number to the second user equipment, and receives a first check value generated according to the random number and sent by the second user equipment;
the receiver is further configured to receive the first check value generated by the second user equipment according to the random number and sent by the first user equipment; and
the processor is further configured to determine whether the second check value received by the receiver is the same as the first check value received by the receiver, and if yes, determine, by the MME, that the verification succeeds.

54. The apparatus according to any one of claims 51 to 53, wherein the first user equipment is user equipment that has a Wi-Fi function and a cellular network communication function; and
the second user equipment is user equipment that has a Wi-Fi function but does not have a cellular network communication function, wherein there are one or more second user equipments.

55. A network access apparatus, comprising:
a processor, configured to acquire account information; and
a transmitter, configured to send the account information to first user equipment through a wireless fidelity Wi-Fi network, so that after confirming that establishment of a dedicated bearer that is established between the first user equipment and a gateway and serves the second user equipment is completed, the first user equipment establishes a mapping relationship between identification information of the second user equipment and the dedicated bearer, wherein the identification information of the second user equipment is used for distinguishing the second user equipment that accesses the first user equipment through the Wi-Fi network.

56. The apparatus according to claim 55, further comprising:
a receiver, configured to: before the transmitter sends the account information to the first user equipment through the wireless fidelity Wi-Fi network, receive a short range communication-identity SRC-ID that is broadcast by the first user equipment in the Wi-Fi network; and
the processor is configured to access the first user equipment in the Wi-Fi network according to the SRC-ID received by the receiver.

57. The apparatus according to claim 55 or 56, wherein the transmitter is further configured to send uplink data to the first user equipment through the Wi-Fi network, wherein the uplink data carries the identification information of the second user equipment, and the identification information of the second user equipment is used for distinguishing the second user equipment that accesses the first user equipment through the Wi-Fi network.

58. The apparatus according to claim 55 or 56, wherein the receiver is further configured to receive a random number generated in a process of verifying the account information and sent by the first user equipment;
the processor is further configured to generate a first check value according to the random number received by the receiver; and
the transmitter is further configured to send the first check value generated by the processor to the first user equipment.

59. The apparatus according to claim 38, wherein the processor is further configured to: after the account information is sent to the first user equipment through the wireless fidelity Wi-Fi network, generate a key according to the random number; and
the transmitter is further configured to send uplink data to the first user equipment through the Wi-Fi network, wherein the uplink data is encrypted by using the key, and the uplink data carries the identification information of the second user equipment.

60. The apparatus according to any one of claims 55 to 59, wherein the first user equipment is user equipment that has a Wi-Fi function and a cellular network communication function; and
the second user equipment is user equipment that has a Wi-Fi function but does not have a cellular network communication function, wherein there are one or more second user equipments.

61. A network system, comprising the network access apparatus according to any one of claims 21 to 30 or any one of claims 41 to 50, the network access apparatus according to any one of claims 31 to 34 or any one of claims 51 to 54, and the network access apparatus according to any one of claims 35 to 40 or any one of claims 55 to 60.
